# EUROPÄISCHE PATENTSCHRIFT

(11) **EP 3 393 303 B1**
(45) Veröffentlichungstag und Bekanntmachung des Hinweises auf die Patenterteilung: **29.05.2019**
(21) Anmeldenummer: 17703324.8
(22) Anmeldetag: 30.01.2017
(51) Int. Cl.: A47C 27/20, B68G 11/06, B60N 2/70

(54) **SCHAUMSTOFFKERN FÜR EIN POLSTER EINES SITZTEILS ODER EINES LIEGETEILS ODER EINER RÜCKENLEHNE EINES POLSTERMÖBELS ODER EINES FAHRZEUGSITZES**
FOAM CORE FOR A CUSHION OF A SEAT PART OR A BED PART OR A BACKREST OF AN ITEM OF UPHOLSTERED FURNITURE OR OF A VEHICLE SEAT
PARTIE CENTRALE EN MOUSSE POUR UN REMBOURRAGE D'UNE PARTIE D'ASSISE OU D'UNE PARTIE DE COUCHAGE OU D'UN DOSSIER D'UN MEUBLE REMBOURRÉ OU D'UN SIÈGE DE VÉHICULE

(30) Priorität: 24.03.2016 DE 102016003492; 22.04.2016 DE 102016004907; 04.05.2016 DE 102016005387
(43) Veröffentlichungstag der Anmeldung: 31.10.2018
(73) Patentinhaber: OKE Kunststofftechnik GmbH & Co. KG, 98663 Ummerstadt (DE)
(72) Erfinder: TILLNER, Thomas, 49076 Osnabrück (DE)
(74) Vertreter: Von Rohr Patentanwälte Partnerschaft mbB
(86) Internationale Anmeldenummer: PCT/EP2017/025015
(87) Internationale Veröffentlichungsnummer: WO 2017/162339

(56) Entgegenhaltungen:
- EP-A1- 0 670 128
- EP-A1- 1 285 607
- CN-U- 202 182 139
- DE-A1- 2 855 241
- GB-A- 2 096 458
- US-A- 5 785 303

## Beschreibung

Die Erfindung betrifft einen Schaumstoffkern für ein Polster eines Sitzteils oder eines Liegeteils oder einer Rückenlehne eines Polstermöbels oder eines Fahrzeugsitzes oder für eine Matratze oder Auflage eines Liegemöbels, mit einem Kerngrundkörper aus Schaumstoffmaterial, insbesondere Kaltschaum, Komfortschaum, Viscoschaum, Latexschaum oder Formschaum, wobei im Kerngrundkörper eine Mehrzahl von vorzugsweise zumindest im Wesentlichen parallel zueinander verlaufenden Federleisten vorgesehen sind. Dabei können Kaltschaum, Komfortschaum und Formschaum aus PU oder PUR hergestellt sein, während Latexschaum aus Natur- oder Syntheselatex hergestellt sein kann. Des Weiteren betrifft die Erfindung ein Polster mit einem Schaumstoffkern der vorgenannten Art sowie ein Polstermöbel, insbesondere Sitz- oder Liegemöbel, oder einen Fahrzeugsitz mit einem Schaumstoffkern oder einem Polster der vorgenannten Art.

Der sogenannte Polsteraufbau eines Polsters beschreibt die einzelnen Schichten und die verwendeten Materialien, die in der Polsterung von Polstermöbeln, insbesondere Sitz- und Liegemöbeln, und auch Matratzen, aber dem Grunde nach auch bei Fahrzeugsitzen verwendet werden. Die häufigsten Materialien sind Schaumstoff, Federkern, Federeinlage, Polsterwatte und Dämmfilz. Den unteren Abschluss des Polsteraufbaus bildet die sogenannte Unterfederung, die die vorgenannten Materialien trägt.

Konventionelle Polstermöbel-Träger, die auch als Unterfederung oder Polstergrund bezeichnet werden, sind Gummigurte, die relativ weich sind, Wellenfedern, die eine mittlere Härte haben und Textilgurte oder Holzfederleisten, die als hart gelten. Holzfederleisten entsprechen dem Lattenrost von Betten. Grundsätzlich ist als Träger auch eine einfache Holzplatte, die meist aus Hartfasermaterial besteht, zu nennen, die die geringste Einsinktiefe ermöglicht, da sie gar nicht nachgibt. Bei Fahrzeugsitzen werden üblicherweise sogenannte Pullmaflex-Federungen, insbesondere in Mattenform, als Träger eingesetzt.

Bei der Wahl des Polsteraufbaus spielt unter anderem das spätere Nachlassen der Polsterung eine Rolle. Eine weiche Sitzfläche, die ein tiefes Sitzen ermöglicht, hat in der Regel nie eine Holzfederleiste als Unterfederung, sondern als Oberpolsterung einen Schaumstoffblock und als Unterfederung üblicherweise Gummigurte und auch über lange Distanz gespannte Wellenfedern. Des Weiteren kommen auch Taschenfedern, die oberhalb des Polstergrundes verwendet werden können, zum Einsatz. Die Taschenfedern können dabei auch einen Teil des Schaumstoffs der Oberpolsterung ersetzen. Taschenfedern werden insbesondere bei Sitzmöbeln und Matratzen verwendet, kommen mittlerweile aber auch bei Fahrzeugsitzen zur Anwendung.

Eine feste Polsterung hingegen hat üblicherweise eine Federeinlage an einem Schaumstoffblock als Oberpolster und als Unterfederung über kurze Distanz gespannte Wellenfedern, Textilgurte, Holzfederleisten oder eine Holzplatte. Hier ist das Einsinkverhalten dann entsprechend gering.

Die am häufigsten eingesetzte Unterfederung von Polstermöbeln ist die (Stahl-) Wellenfeder, die auch als Nosag-Feder bezeichnet wird. Wellenfedern, die neben Pullmaflex-Matten auch bei Fahrzeugsitzen eingesetzt werden, dienen als federnder Untergrund sowohl für flache Polster als auch für hohe Polsterungen mit Federkern. Sie werden als Unterfederung von Sitzen und auch in Rückenlehnenpolsterungen verwendet. Wellenfedern werden meist in Rollenform als Ring mit einer Gesamtlänge von etwa 30 m hergestellt. Während die Breite der Wellenfeder stets einheitlich ist und nicht berücksichtigt werden muss, ist das Maß der Drahtstärke, von dem die Härte oder Weichheit der späteren Polsterung beeinflusst wird, stets zu beachten. Dünne Drahtstärken (beispielsweise etwa 2,8 mm) werden ausschließlich für Rückenpolsterungen verwendet. Sitzpolsterungen benötigen einen Untergrund mit stärkeren Wellenfedern mit etwa 3,6 oder 4,0 mm Drahtstärke.

Zum Einbau in Möbel oder einen Fahrzeugsitz wird als erster Arbeitsschritt die Anzahl der benötigten Wellenfedern, die nebeneinander von der vorderen zur hinteren Zarge verlaufen, festgelegt. Die Abstände zwischen den Federn liegen in der Regel zwischen 70 mm und 135 mm. Hiervon ausgehend werden für eine Zarge von 40 cm Breite vier Wellenfedern benötigt. Dieser Abstand beschreibt den Abstand der Mitte der Feder bis zur Mitte der nächsten Feder, also nicht den tatsächlichen Zwischenraum von Feder zu Feder.

Es folgt als nächster Arbeitsgang das Ausmessen der benötigten Länge der Wellenfedern. Dies ist am einfachsten mit einem sogenannten Gliedermaßstab zu bewerkstelligen, da die Federn einen leicht gewölbten Verlauf nehmen sollen und ein Zollstock entsprechend mit einem sanften Bogen von Hinter- und Vorderzarge angelegt werden kann. Das ermittelte Maß wird vom Wellenfederring in entsprechender Stückzahl per Bolzenschneider abgeschnitten. Da die durchtrennten Bögen wegen der Endlosanfertigung des Produkts stets in Verlaufsrichtung der Wellenfeder zeigen, müssen diese Enden mit einer speziellen Biegevorrichtung so abgebogen werden, dass die äußeren Endbögen nach innen, also in Richtung des späteren Polstergrunds weisen. Dies ist notwendig, da die Federn sonst bei starker Beanspruchung aus ihren Halterungen (Clips) herausrutschen können. Die Wellenfedern werden zuerst an der Hinterzarge des Rahmens befestigt. Dazu werden Kunststoff- oder Metallclips, auch Scharniere genannt, an den entsprechenden Positionen angetackert oder ganz klassisch mit großen Stiftgurten und/oder Harpunennägeln befestigt.

Aus dem Stand der Technik sind unterschiedliche Clips oder Clipstränge mit mehreren Clips mit festen Abständen bekannt. Einige Varianten werden einfach oder doppelt angetackert, andere werden erst einmal angetackert, dann wird die Feder in den Clip eingehangen, das Oberteil des Clips herausgebogen und mit zwei weiteren Tackerklammern verschlossen.

Nachdem auch an der Vorderzarge die Einzelscharniere an den korrekten Positionen angeschlagen sind, können die Wellenfedern mit hoher Spannung eingehängt werden. Es gibt verschiedene Hilfsmittel und Spezialwerkzeuge für diese kräftezehrende Arbeit. Traditionell wird im Stand der Technik eine reißfeste Schlaufe verwendet, die in den vorderen Bogen der Feder eingefädelt wird. Anschließend wird über die Schlaufe der Feder diese ausreichend langgezogen, um sie in ihren Clip auf der Vorderzarge einhängen zu können. Auf diese Weise werden anschließend alle Wellenfedern eingehängt. Eventuell ist es nötig, dass eine zweite Person das Polstergestell bei diesem Arbeitsschritt am Boden hält, da leichte Gestelle unter der extremen Zugbelastung bis zum Einhängen einer Feder rutschen und kippen können.

Wellenfedern liegen idealerweise immer paarweise symmetrisch nebeneinander. Bei zwei benachbarten Federn liegen sich jeweils die geschlossenen und offenen Bögen direkt gegenüber. Dies ermöglicht die abschließende Verbindung der verschiedenen Federn mit stabilen Gummiringen oder mit einer mehrfach querverlaufenden Durchschnürung der Wellenfedern mit Fäden, so dass sich eine ungleichmäßige eher punktuelle Belastung des späteren Polsters auf dem Polstergrund großflächiger verteilt. Für die Durchschnürung wird an einer Seitenzarge ein ausreichend langer Schnürfaden befestigt und zur gegenüberliegenden Zarge geführt, wobei jede Feder eingeknotet und das Fadenende auf der gegenüberliegenden Seite befestigt wird.

Anschließend folgt noch eine Abdeckung des Wellenfedergrunds mit schwerem Spannleinen oder Federleinen. Dieses wird passend zugeschnitten und übergeheftet. Da aber nicht alle Polstermöbel an ihrer Unterseite mit Spannstoff verschlossen werden und ein Blick unter das fertige Möbel ein sauberes Arbeitsbild bieten soll, wird das Leinen beim anschließenden Anschlagen nach oben eingeschlagen. Sollten Vorder- und Hinterstollen beim Abdecken mit Federleinen im Wege sein, muss das Leinen vor dem Anschlagen in diesen Ecken einfach oder Y-förmig eingeschnitten werden.

Insgesamt stellt sich die Anbringung einer Unterfederung mit Wellenfedern bei Möbeln als sehr aufwendig dar. In entsprechender Weise gilt dies für die Verwendung und Montage von Wellenfedern bei Autositzen. Aber auch die Befestigung von Pullmaflex-Matten oder Taschenfederkernen in Autositzen, Polstermöbeln und Matratzen gestaltet sich häufig problematisch.

Im Übrigen ist, insbesondere bei Pullmaflex-Federungen bzw. -matten nachteilig, dass sie ein Abspannvlies benötigen, da sie sich sonst in den Schaumstoff der Oberpolsterung einschneiden würden.

Gurtbänder oder Polstergurte dienen grundsätzlich als Polsterträger für Sitz- und Rücklehnenpolsterungen, werden überwiegend aber in Rückenlehnen eingesetzt, da sie tendenziell elastischer sind als die zuvor beschriebenen Wellenfedern. Gurte werden auch für extravagant geformte Elemente mit Radien genutzt, die nur schlecht mit Wellenfedern gestützt werden können, oder bei Polstermöbeln, bei denen ein besonders legerer Sitzkomfort gewünscht ist.

Gurte bestehen aus unterschiedlichen Materialien mit unterschiedlicher Elastizität. Zum Aufbau der Unterpolsterung bei der klassischen Polsterung sowie bei Federkern-, Flach- und Schaumpolsterung werden in der Regel unelastische Textilgurte, die meist aus Hanf oder Jute bestehen, eingesetzt. Für den Aufbau elastischer Rücken- und Sitzpolsterung verwendet man zumeist gewebte Gummi- oder Vollgummigurte in Bandbreiten zwischen 30 und 80 mm, bis hin zu 150 mm und mit unterschiedlicher Dehnbarkeit. Für den Rückenbereich werden meist sehr dehnbare Gummibänder und für den Sitzbereich weniger dehnbare Gurte verwendet.

Auch bei der Verwendung von Polstergurten müssen Gurtbreiten und Elastizitäten erst berechnet und dann für jeden Sitz ausgemessen und angezeichnet werden. Die Befestigung der Polstergurte auf dem Grundrahmen des Möbels erfolgt dann als Gurtgrund (weniger elastisch), Gummigurtband (elastisch) oder Gummigewebe (für geschlossenen Polstergrund). Die Polstergurte werden dabei nicht einfach nebeneinander befestigt, sondern horizontal und vertikal zu einem Gurtgrund verwebt. Sie werden kreuzweise gespannt und mit einem Tacker oder speziellen Gurtnägeln (Gurtstiften) befestigt. Als Hilfsmittel bei der kraftintensiven manuellen Spannung und Befestigung dienen beispielsweise Gurtspanner. Sie haben auf der oberen Kante Stahlspitzen, die man beim Spannvorgang durch den Gurt sticht. Am anderen Ende des Werkzeugs ist eine rutschfeste Auflage, die man an der Zarge des Holzrahmens ansetzt. So kann der Grad der Spannung abgeschätzt und die Gurte mit möglichst einheitlicher Spannung befestigt werden.

Auch die Anbringung von Polstergurten stellt sich in der Praxis als relativ aufwendig dar.

Des Weiteren werden Holzfederleisten als Unterfederung verwendet, in der Regel allerdings nur für Möbel mit langen Flächen, insbesondere Betten und bei Polstermöbeln mit integrierter Bettfunktion. Dabei sind die einzelnen Holzfederleisten parallel und mit Abstand zueinander angeordnet und entweder an einem Rahmen gehalten oder in der Regel über zwei quer zu den Federleisten verlaufende Gewebegurte miteinander verbunden. Über den Rahmen bzw. die Gewebegurte wird der Abstand und die relative Anordnung der einzelnen Federleisten zueinander sichergestellt. Diese Konstruktion mit einem äußeren Rahmen ist vergleichsweise aufwendig und nimmt relativ viel Platz ein, was die Lagerhaltung und den Transport erschwert. Allerdings ist es auch bekannt, die Holzfederleisten über Gurte zusammenzuhalten. Hierdurch ergibt sich ein sehr einfacher Aufbau und im Übrigen ist ein derartiger Polstergrund auch aufrollbar. Allerdings hat die vorgenannte Polstergrund-Konstruktion mit den quer zu den Holzfederleisten laufenden Gurten den Nachteil, dass sich hierbei dauerhaft eine definierte Lage der einzelnen Holzfederleisten zueinander im eingebauten Zustand kaum erreichen lässt.

Bei der vorgenannten Polstergrund-Konstruktion bestehen die Federleisten in der Regel aus Holz. Um eine hohe Tragfähigkeit erreichen zu können, müssen die Holzfederleisten eine Vorkrümmung zur Mitte hin aufweisen. Bei unterschiedlichen Breiten des Polstergrundes führt dies dazu, dass unterschiedlich lange und damit unterschiedlich gekrümmte Holzfederleisten vorgehalten werden müssen.

Im Übrigen wird in der Regel auf einen Polstergrund der vorgenannten Art ein Auflagenschoner als Zwischenlage zwischen der Auflage (Polsterung) und dem Polstergrund angeordnet. Dieser Auflagenschoner dient in der Regel zur Schonung der Unterseite der Auflage.

Bei Autositzen gibt es in der Regel keinen Polstergrund der zuvor beschriebenen Art wie bei Sitzmöbeln. Üblicherweise werden Pullmaflex-Federungen eingesetzt, die durch Drahtverbindungen gebildet werden, manchmal auch kurze Wellenfedern oder Taschenfedern. Üblicherweise ist der Aufbau von außen nach innen wie folat: Metallschale mit Federung, gegebenenfalls Vlies, Schaumstoff, Vlies, Bezug.

Aus der DE 19 25 863 A ist ein in einen tragenden Rahmen einfügbarer Polsterkörper aus geschäumten Kunststoff bekannt, wobei die die Abstützung des Polsterkörpers auf dem Rahmen übernehmenden Federleisten in den Polsterkörper im Abstand von der Auflagefläche eingeschäumt sind. Der Polsterkörper kann sowohl bei einer Matratze als auch bei Couch- und Sesselkonstruktionen verwendet werden.

Aus der AT 310 577 B ist ein Polsterkörper sowie ein Verfahren zu dessen Herstellung bekannt, wobei in den Schaumstoff des Polsterkörpers Federstützen über ihre gesamte Erstreckung eingebettet sind, die von dem Schaumstoff des Polsterkörpers allseitig umgeben werden.

Weiterhin geht aus der DE 20 2007 008 867 U1 eine Anordnung mit einem Bettgestell und einer Kombinationsmatratze hervor, wobei in der Matratze Durchgangsöffnungen vorgesehen sind, in die Latten eingeführt sind, die quer zur Liegerichtung und parallel zur Liegefläche durch die Matratze verlaufen.

Bei den vorgenannten Polsterkörpern stellt sich die Herstellung in Verbindung mit den dort eingesetzten Federleisten als aufwendig und damit kostenintensiv dar. Des Weiteren ist der Federungskomfort zum Teil nur bedingt gut.

DE 2855241 A1 offenbart einen Schaumstoffkern nach dem Oberbegriff des Anspruchs 1. Aus der GB 2096458 A ist ein Schaumstoffkern nach dem Oberbegriff des Anspruchs 2 bekannt. Aufgabe der vorliegenden Erfindung ist es nun, den zum Teil recht aufwendigen Aufbau eines Polstermöbels (Sitz- oder Liegemöbels) oder eines Fahrzeugsitzes zu vereinfachen und im Übrigen den Sitz- bzw. Liegekomfort zu erhöhen.

Die vorgenannte Aufgabe ist bei einem Schaumstoffkern der eingangs genannten Art, der letztlich das Basiselement des Polsters darstellt, und zwar unabhängig davon, ob es für ein Sitzteil, ein Liegeteil oder eine Rückenlehne eines Polstermöbels, für eine Matratze oder Auflage eines Liegemöbels oder eines Fahrzeugsitzes Einsatz findet, erfindungsgemäß durch die Merkmale des Anspruchs 1 gelöst.

Erfindungsgemäß ist vorgesehen, dass die Federleisten in besonderer Weise aus einem faserverstärkten Kunststoffmaterial, insbesondere in Form eines Faserverbundkerns hergestellt sind. Der vorzugsweise pultrudierte Faserkern, der insbesondere Glasfasern aufweist, ist von einer thermoplastischen Matrix umschlossen. Der Faserkern dient als Verstärkungselement und definiert maßgeblich die Elastizität der Federleisten. Er kann als Hohlrohr oder auch als gefüllter Strang ausgebildet sein. Je nach erforderlicher Elastizität weist er einen größeren oder kleineren Durchmesser auf. Auch durch die Querschnittsform lässt sich die Elastizität beeinflussen. Dabei ist die Form des Faserkerns nicht auf runde oder elliptische Querschnitte beschränkt. Auch eckige, insbesondere rechteckige Querschnitte sind möglich. Aufgrund des Faserkerns und des den Faserkern umgebenden Mantels können relativ dünne, aber dennoch sehr tragfähige Federleisten zur Verfügung gestellt werden, die geradlinig und nicht vorgekrümmt ausgebildet sind.

Aufgrund der erfindungsgemäßen Materialkombination des Faserkerns mit der umgebenden Mantelmatrix können unterschiedlichen Elastizitätsstufen der Federleiste bei einheitlicher äußerer Geometrie der Federleiste gewährleistet werden. Sind beispielsweise relativ hohe Festigkeiten erforderlich, wird ein dickerer Faserkern und/oder ein Faserkern mit einer anderen Querschnittsform verwendet, während das umgebende Mantelmaterial dann dünner ist. Von den äußeren Abmaßen her liegt dann kein Unterscheid zu einer Federleiste vor, bei der ein dünnerer Faserkern und ein dickerer Mantel verwendet wird.

Darüber hinaus ist es bei der Erfindung ohne weiteres möglich, dass im Schaumstoffkern Federleisten mit unterschiedlichen Elastizitätsstufen vorgesehen sind. Bedarfsweise können an Stellen, an denen höhere Belastungen auftreten, härtere Federleisten eingesetzt werden. So können randseitig am Schaumstoffkern vorgesehene Federleisten eine höhere Elastizität bzw. weniger steif ausgebildet sein als im mittigen Bereich vorgesehene Federleisten. An Stellen, an denen die größte Gewichtskraft zu erwarten ist, sollten härtere bzw. steifere Federleisten vorgesehen sein.

Im Übrigen ist es bei der erfindungsgemäßen Federleiste so, dass diese sehr einfach und kostengünstig hergestellt werden kann. Da, wie zuvor ausgeführt worden ist, Vorkrümmungen oder Vorspannungen nicht erforderlich sind, können für unterschiedliche Breiten des Schaumstoffkerns erforderliche Längen der Federleiste ohne weiteres hergestellt werden, beispielsweise durch Ablängen der notwendigen Federleistenlänge von einem beispielsweise durch Pultrusion hergestellten (Endlos-)Strang.

Bei den unterschiedlichen Materialien des Faserkerns und des Mantels ist zu gewährleisten, dass die beiden Komponenten nach der Herstellung der Federleiste auch hinreichend miteinander verbunden sind, um letztlich die notwendigen Festigkeits- und Trageigenschaften gewährleisten zu können. Bei pultrudierten Federleisten ergibt sich eine sehr gute Haftung der beiden Komponenten aneinander bereits dadurch, dass das Material des Mantels nach der Pultrusion abkühlt und schrumpft, so dass sich bereits hierdurch ein guter Zusammenhalt der beiden Komponenten ergibt. Zur weiteren Verbesserung der Haftung der beiden Komponenten aneinander ist bei einer bevorzugten Ausgestaltung der Erfindung vorgesehen, dass der Faserkern der Federleiste einen Faserkernstrang insbesondere mit einem zumindest im Wesentlichen runden oder elliptischen Querschnitt aufweist, wobei um den Faserkernstrang zumindest bereichsweise eine spiralförmig verlaufende Wicklung vorgesehen ist. Vorzugsweise erstreckt sich die spiralförmige Wicklung über die gesamte Länge des Faserkernstrangs. Da die Wicklung zum Faserkern gehört, besteht auch diese aus Fasern.

Im Zusammenhang mit der Wicklung ist bevorzugt vorgesehen, dass benachbarte Windungen der Wicklung berührungsfrei voneinander beabstandet sind. Auf diese Weise ergeben sich Zwischenräume zwischen benachbarten Windungen der Wicklung, so dass sich eine Verzahnungsmöglichkeit für das Mantelmaterial ergibt. Wird das Mantelmaterial bei der Herstellung der Federleiste um den Faserkern geführt, dringt das Mantelmaterial in die Freiräume zwischen benachbarten Windungen ein, so dass sich eine sichere Verbindung zwischen den beiden Materialien ergibt. Dies ist insbesondere bei der Herstellung der erfindungsgemäßen Federleiste wichtig, da die unterschiedlichen Materialien des Faserkerns und des Mantels beim Abkühlen unterschiedliches Schrumpfverhalten aufweisen können und durch die vorgenannte Verzahnung ein Lösen des einen Materials vom anderen verhindert wird.

Bei der Erfindung ist das federnde bzw. elastische Element unmittelbar in den Schaumstoffkern bzw. dessen Kerngrundkörper integriert und darin eingeschlossen. Ausdrücklich hinzuweisen ist darauf, dass es sich bei dem erfindungsgemäßen Polster letztlich um ein solches handeln kann, was für ein Sitzteil oder ein Liegeteil oder eine Rückenlehne eines Polstermöbels Verwendung finden kann und in gleicher Weise für das Sitzteil oder die Rückenlehne eines Fahrzeugsitzes. Im Übrigen handelt es sich bei dem erfindungsgemäßen Polster letztlich auch um eine Matratze oder eine Auflage eines Liegemöbels, so dass die nachfolgenden Ausführungen im Hinblick auf ein Polster in gleicher Weise auch für eine Matratze oder Auflage eines Liegemöbels gelten, auch wenn dies im Einzelnen nicht ausdrücklich angegeben ist. Insbesondere ergibt sich bei der Erfindung im Zusammenhang mit einer Matratze oder Auflage in Verbindung mit einem Bett als Liegemöbel der wesentliche Vorteil, dass auf eine separate Unterfederung in Form eines Lattenrostes verzichtet werden kann. Das gilt natürlich in gleicher Weise für die weiteren genannten Anwendungen, bei denen ebenfalls eine separate Unterfederung nicht erforderlich ist, da die Unterfederungsfunktion durch die in dem Grundkörper integrierten Federleisten bereits vom Schaumstoffkern selbst übernommen wird.

Beim erfindungsgemäßen Schaumstoffkern ergibt sich damit ein Schichtaufbau in der Form Schaumstoff - Federleisten - Schaumstoff. Die erfindungsgemäße Ausgestaltung bietet den wesentlichen Vorteil, dass Polster oder Matratzen/Auflagen, die einen erfindungsgemäßen Schaumstoffkern aufweisen, unmittelbar auf entsprechende Zargen am Sitzteil, am Liegeteil, oder der Rückenlehne des Polstermöbels, am Liegemöbel oder an der Metallstruktur bzw. dem -rahmen des Fahrzeugsitzes, und zwar am Sitzteil und/oder der Rücklehne, aufgelegt oder angelegt und dort in entsprechender Weise abgestützt werden können. Dabei versteht es sich, dass die einander gegenüberliegenden Zargen auch Teil eines umlaufenden Rahmens oder einer entsprechenden Schale sein können. In jedem Falle kann bei Verwendung des erfindungsgemäßen Schaumstoffkerns die im Stand der Technik vorgesehene Unterfederung gänzlich entfallen. Insbesondere kann bei Verwendung des erfindungsgemäßen Schaumstoffkerns eine Unterfederung in Form von Gurten, Wellenfedern, Taschenfederkernen, Pullmaflexmatten, Holzleisten, Lattenrosten und/oder Holzplatten entfallen. Dies wirkt sich insbesondere in produktionstechnischer Hinsicht aus, da der beim Stand der Technik notwendige Aufwand zur Herstellung und Anbringung einer Unterfederung gänzlich entfällt. Durch die Erfindung ergeben sich aber nicht nur produktionstechnische Vorteile. Die im Kerngrundkörper vorgesehenen Federleisten sorgen für einen entsprechenden Komfort beim Sitzen bzw. Anlehnen, da die Federleisten an sich schon elastisch sind und sie auch durch den unterhalb der Federleisten befindlichen Schaumstoff zusätzlich federn.

Im Zusammenhang mit dem erfindungsgemäßen Schaumstoffkern ist festgestellt worden, dass es vorteilhaft ist, wenn sich die Federleisten längs oder quer zwischen der vorderen und der hinteren Stirnseite des Kerngrundkörpers erstrecken. Im beispielsweise in das Sitzteil eingebauten bzw. eingebrachten Zustand ist die Längs- oder Queranordnung dann in Bezug zur vorderen Sitzkante des Sitzteils zu verstehen. Ergänzend oder alternativ dazu sind die Federleisten bevorzugt zumindest im Wesentlichen parallel zur Unter- und/oder Oberseite des Kerngrundkörpers angeordnet. Es ist festgestellt worden, dass die vorgenannte Anordnung in der genannten Erstreckungsrichtung letztlich zu einem hohen Sitz-, Liege- bzw. Abstützkomfort führt.

Bei einer bevorzugten Ausgestaltung der Erfindung ist vorgesehen, dass vom Mantel der Federleiste, der den Faserkern umgibt, auf gegenüberliegenden Seiten seitlich jeweils ein Leistenschenkel absteht. Dabei ist bevorzugt die Breite des Leistenschenkels größer als der Durchmesser des Faserkerns, und zwar insbesondere um wenigstens das 1,5-fache, weiter bevorzugt um das wenigstens 2-fache, und insbesondere um das 2,4- bis 3,0-fache des Durchmessers des Faserkerns. Im Übrigen ist in diesem Zusammenhang bevorzugt vorgesehen, dass die maximale Dicke des Leistenschenkels geringer ist als der Durchmesser des Faserkerns, vorzugsweise um wenigstens das 2-fache, weiter bevorzugt um wenigstens das 3-fache und insbesondere um das 4- bis 8-fache des Durchmessers des Faserkerns.

Im Ergebnis ergibt sich dadurch im Querschnitt gesehen ein verdickter mittiger Bereich mit Faserkern und Ummantelungsbereich, an den sich seitlich auf gegenüberliegenden Seiten jeweils ein Mantelschenkel mit geringerer Dicke anschließt. Im Zusammenhang mit der Erfindung ist festgestellt worden, dass sich die federnden bzw. elastischen Eigenschaften der Federleiste ausgesprochen positiv mit den entsprechenden Eigenschaften des Schaumstoffmaterials des Schaumstoffkerns ergänzen. Die eigentliche Federelastizität wird dabei durch den Faserkern erbracht, während die Übertragung der Federwirkung der Federleisten auf den Schaumstoff letztlich von den gegenüber dem Faserkern relativ großflächigen Leistenschenkeln übernommen werden.

Allerdings sind auch Anwendungen möglich, bei denen auf Mantelschenkel verzichtet wird, also lediglich der Faserkern mit dem Ummantelungsbereich als Faserverbundkern vorgesehen ist. Diese Anwendung eignet sich besonders für Fahrzeugsitze.

Bei einer bevorzugten Ausgestaltung der Erfindung ist die Federleiste um eine im Querschnitt durch die Leistenschenkel gelegte Schenkelmittelachse und/oder um eine zur Schenkelmittelachse senkrecht verlaufende, durch den Kern gelegte Kernmittelachse spiegelsymmetrisch. Die spiegelsymmetrische Ausbildung der Federleiste vereinfacht die Anordnung der einzelnen Federleisten bei der Herstellung des erfindungsgemäßen Schaumstoffkerns, da hierbei nicht auf eine ober- oder unterseitige Anordnung der Federleisten zu achten ist.

Die Einbringung der Federleisten in den Kerngrundkörper kann grundsätzlich auf unterschiedliche Art und Weise erfolgen. Erfindungsgemäß ist vorgesehen, dass die Federleisten in den Kerngrundkörper eingeschäumt sind. Verfahrensgemäß ist hierbei vorgesehen, dass die Leisten bereits bei der Herstellung des Schaumstoffkerns in ein entsprechendes Werkzeug eingelegt und umschäumt werden. Bei dieser Alternative wird bevorzugt Formschaum als Schaumstoffmaterial verwendet.

Bei einer anderen alternativen Ausgestaltung der Erfindung ist vorgesehen, dass der Kerngrundkörper aus wenigstens zwei Teilen besteht, nämlich einem oberen Kerngrundkörperteil und einem unteren Kerngrundkörperteil. Diese Teile können als solche separat hergestellt worden sein oder aber auch zunächst einstückig hergestellt und anschließend durchschnitten worden sein. Bei dieser Ausführungsform sind die Federleisten zwischen den beiden Grundkörperteilen angeordnet, wobei die beiden Teile dann auf ihren einander zugewandten Flächen miteinander verklebt sind.

Grundsätzlich können im Zusammenhang mit der vorliegenden Erfindung unterschiedliche Schäume eingesetzt werden, nämlich insbesondere Kaltschaum, Komfortschaum, Latexschaum, Formschaum oder Visco-Materialien.

Kaltschaum wird in der Regel aus Polyurethan (PU oder PUR) und weiteren Zutaten im sogenannten Blockschaumverfahren hergestellt, wobei eine Aufschäumung stattfindet. Es ist dabei stoffbedingt nicht nötig, den Schaumblock aus Kaltschaum durch Hitze auszuhärten. Dieses Verfahren hat zur Folge, dass Kaltschaum aus Polyurethan eine höhere Stauchhärte als Komfortschaum besitzt. Deshalb wird Kaltschaum auch als HR-(high resilence = hohe Elastizität) Schaum bezeichnet. Außerdem zeichnet sich Kaltschaum durch eine gute Punktelastizität und Körperanpassung aus. Die Herstellung als Blockschaum meint dabei, dass große Schaumstoffblöcke aufgeschäumt werden, aus denen dann die notwendigen Stoffteile geschnitten werden. Durch das leichte Gefälle in der Dichte innerhalb des Kaltschaum-Blocks können die geschnittenen Blockteile Unterschiede im Raumgewicht aufweisen, die aber gering sind. Teile aus dem unteren Blockteil weisen einen höheres Raumgewicht auf als die Teile aus dem oberen Teil des Kaltschaumblocks. Dabei können sich Unterschiede bis maximal 15% ergeben. Jedenfalls weist Kaltschaum in der Regel eine höhere Materialdichte als Komfortschaum auf.

Nachdem ein Kaltschaumblock aufgeschäumt worden ist, sind fast alle Poren geschlossen. Allerdings ist Offenporigkeit eines Schaumstoffkerns wichtig für die Atmungsaktivität. Daher werden bei aus Kaltschaum hergestellten Schaumstoffteilen diese nach dem Aufschäumen durch ein Walzwerk gefahren. Dabei werden die Zellen aufgebrochen ("gecrusht"). Bei manchen Kaltschaumteilen setzt sich dieser Vorgang während der Benutzung noch fort. Von daher werden Schaumstoffteile aus Kaltschaum nach der Benutzung häufig noch atmungsaktiver. Die körpergerechten Zonen von Schaumstoffkernteilen aus Kaltschaum werden durch Bohrungen, Schnitte und/oder Oberflächenfräsungen hergestellt.

Des Weiteren ist es möglich, Komfortschaum für Schaumstoffkerne zu verwenden. Auch hierfür wird PU oder PUR eingesetzt, das entweder unter Zuhilfenahme von Treibmitteln wie Kohlendioxid oder durch Kontakt mit Wasser aufgeschäumt wird. So entsteht aus dem Polyurethan ein weicher Schaumstoff. Dieser enthält neben dem PU oder PUR auch Isocyanate und mehrfunktionale Alkohole (Polyole), die nicht-reaktiv sind. Daher wird zum Aushärten dieses Schaums Hitze benötigt, was den wesentlichen Unterschied zum Kaltschaum ausmacht. Ein weiterer Unterschied zwischen Kalt- und Komfortschaum besteht darin, dass die Zellen des Komfortschaums nicht gecrusht werden müssen, sondern direkt nach der Herstellung offenporig sind. Auch hierbei werden körpergerechte Zonen im Anschluss gebohrt, gefräst und/oder geschnitten. Insgesamt ist Komfortschaum weniger punktelastisch als Kaltschaum und bietet weniger Komfort als dieser.

Bei Formschaum handelt es sich um einen hochwertigen Schaumstoff, der direkt während des Aufschäumens in eine Form gegossen wird. Durch dieses Verfahren ergeben sich Stoffkerne, die eine homogene Zellstruktur aufweisen, was zu einer längeren Lebensdauer führt. Auch ist das Raumgewicht höher als bei einem Kaltschaumstoff. Im Übrigen entsteht bei Formschaum aufgrund seiner Herstellung eine Außenhaut, die die Formbeständigkeit des Formschaumteils erhöht. Die körpergerechten Zonen werden hier bereits im Gießverfahren erzeugt und müssen nicht nachträglich in den Schaumstoff eingeschnitten oder gefräst werden.

Bei Visco-Schaum handelt es sich um einen Schaum mit viscoelastischen oder auch thermoplastischen Eigenschaften. Dieser Schaum, der weniger offenporig ist und in der Regel aus Polyurethan besteht, ist besonders anpassungsfähig, da er kaum Gegendruck bei Belastung bietet. Deshalb benötigt ein Visco-Schaumkern immer noch zusätzlich eine Schicht aus einem anderen Schaum, insbesondere Kaltschaum, damit ausreichend Stützkraft gegeben ist. Auch ein Taschenfederkern kann als Basis eines Visco-Schaumkerns dienen. Der Schaum passt sich unter dem Druck des Körpers und durch die Körperwärme genau an. Bei Änderung der Position des Benutzers geht der Schaum in seine ursprüngliche Form zurück. Allerdings geschieht dies eher langsam. Verschiedene Visco-Schäume sind sehr unterschiedlich. Einige sind bei niedriger Raumtemperatur sehr hart und brauchen daher einige Zeit, um sich dem Körper anzupassen. Wird der Visco-Schaum wärmer, benötigt er dafür einige wenige Sekunden (beispielsweise drei Sekunden). Die Reaktionszeit hängt jedoch stark von der Qualität und Zusammensetzung des Schaums ab. Ein Visco-Schaumstoffkern ist extrem punktelastisch und bietet eine sehr gute Druckentlastung.

Latex-Schäume werden aus synthetischem oder natürlichem Latex (Naturlatex oder auch Naturkautschuk genannt) oder einer Mischung aus beiden Materialien hergestellt. Die Herstellung erfolgt durch die Vulkanisation, wobei Kautschuk mit Hilfe von Druck und Hitze bearbeitet wird. Dabei werden die Kautschuk-Moleküle miteinander vernetzt, wodurch der Stoff sehr elastisch wird. Das zähe Latex wird dann in eine Form gegossen, in der sich Heizstifte befinden. Diese sorgen für die typischen Belüftungskanäle in den Latexschäumen. Latexschäume zeichnen sich vor allem durch ein hohes Raumgewicht aus, wodurch Kerne aus einem Latexschaum eine relativ lange Lebensdauer haben. Im Übrigen sind Latex-Schäume besonders elastisch, insbesondere punktelastisch, und bieten eine ausgesprochen gute Körperanpassung. Da Naturlatexschäume aus natürlichem Material bestehen, sind sie üblicherweise für Allergiker besonders gut geeignet.

Im Übrigen ist es auch möglich, einen Schaumstoffkern aus unterschiedlichen Schichten aus Latex und anderen Schaummaterialien herzustellen. Hierbei werden dann die Eigenschaften der unterschiedlichen Materialien miteinander kombiniert. Bei allen Schaumarten kann in der Regel der jeweilige Härtegrad bedarfsweise ausgewählt bzw. eingestellt werden. Lediglich bei Latexschäumen ist der Härtegrad oft festgelegt.

Das Raumgewicht des Schaumstoffes des Schaumstoffkerns liegt je nach Art des verwendeten Schaumstoffs zwischen 20 bis 80 kg/m³, bevorzugt zwischen 30 kg/m³ und 60 kg/m³.

Unabhängig von der Art der Herstellung des Schaumstoffkerns bietet es sich an, dass in zumindest einem, vorzugsweise in beiden Leistenschenkeln der Federleiste eine Vielzahl von Öffnungen vorgesehen sind. Dabei können die Öffnungen in regelmäßigen Abständen und/oder in sich wiederholender Anordnung im jeweiligen Leistenschenkel vorgesehen sein. Durch die Öffnungen wird bei der Ausführungsform, bei der wenigstens zwei Schichten bzw. zwei Kerngrundkörperteile vorgesehen sind, sichergestellt, dass die einander zugewandten Seiten der beiden Kerngrundkörperteile auch durch die Perforation bzw. die Öffnungen in den Leistenschenkeln hindurch miteinander verbunden werden. Auf diese Weise ergibt sich eine besonders feste und innige Verbindung zwischen den Kerngrundkörperteilen und den Leistenschenkeln. Bei der Herstellungsalternative des Einschäumens der Federleisten wird durch die Löcher bzw. die Perforation sichergestellt, dass der zum Teil noch flüssige bzw. gerade aufschäumende Schaumstoff auch durch die Öffnungen in den Leistenscheiteln gelangen, so dass sich auf diese Weise eine sehr innige und feste Verbindung des Kunststoffes zu den Federleisten ergibt.

Werden hingegen zwei Schnittschaumteile in Sandwichbauweise mit dazwischenliegenden Leisten über eine Klebverbindung miteinander verbunden, dringt der Klebstoff durch die Öffnungen in den Leistenschenkeln, so dass sich ebenfalls eine sehr gute und fast vollflächige Verbindung der beiden Schnittteile, letztlich auch im Bereich der Leisten, ergibt.

Grundsätzlich ist auch eine Kombination der beiden vorgenannten Verfahren möglich. So ist es möglich, das eine Kerngrundkörperteil in einem Schäumvorgang herzustellen und dabei die Federleisten an der Unter- oder der Oberseite in das Teil einzuschäumen, wobei die Außenseiten der Federleisten noch offen liegen.

Bei dieser Ausführungsform sind die Federleisten zumindest unterseitig und bevorzugt auch an den Längsseiten eingeschäumt. Anschließend kann ein weiteres Kerngrundkörperstück mit dem die Federleisten aufweisenden Kerngrundkörperstück verklebt werden. Bei dieser Ausführungsform können die Federleisten sowohl mit dem unteren, den höheren Härtegrad aufweisenden Schaumstoff als auch mit dem oberen, den geringeren Härtegrad aufweisenden Schaumstoff durch den Schäumvorgang verbunden sein.

Im Zusammenhang mit Versuchen, die durchgeführt worden sind, ist festgestellt worden, dass das Verhältnis der freien Öffnungsfläche der Öffnungen auf der zugehörigen Leistenschenkelfläche zur Leistenschenkelfläche als solcher größer als 5% ist, vorzugsweise zwischen 10% bis 80%, bevorzugt 20% bis 70%, weiter bevorzugt 30% bis 60% und insbesondere zwischen 40% und 50% liegt.

Zur Erzielung eines hohen Komforts im Zusammenhang mit dem erfindungsgemäßen Schaumstoffkern ist vorgesehen, dass das untere Kerngrundkörperteil einen höheren Härtegrad, insbesondere aus einem dichteren Schaummaterial, als das obere Kernkörpergrundteil aufweist. Darüber hinaus kann es vorteilhaft sein, wenn zumindest in der Ebene der Federleisten randseitig, insbesondere rahmenartig umlaufend, ein Bereich des Kerngrundkörpers mit einem höheren Härtegrad, insbesondere mit einem dichteren Schaumstoffmaterial, als das obere Kerngrundkörperteil vorgesehen ist. Auch dies erhöht den Liege-, Sitz- bzw. Anlehnkomfort bei einer Polsterung bzw. Matratze oder Auflage in Verbindung mit dem erfindungsgemäßen Schaumstoffkern.

Bei Liege-, Sitz- und Anlehnversuchen, die im Zusammenhang mit der vorliegenden Erfindung durchgeführt worden sind, ist im Übrigen festgestellt worden, dass die Federleisten maximal im mittigen, bevorzugt im untermittigen und insbesondere im unteren Drittel bis unteren Fünftel der Dicke des Kerngrundkörpers angeordnet sind. Bei der Anordnung der Federleisten im unteren Bereich wird letztlich der beste Liege-, Sitz- bzw. Anlehnkomfort erreicht.

Des Weiteren ist es grundsätzlich möglich, den Kerngrundkörper in der erfindungsgemäßen Art und Weise mit integrierten Federleisten auszubilden, wobei dann bedarfsweise ober- und/oder unterseitig wenigstens eine weitere Schicht aus einem Polstermaterial, vorzugsweise Schaumstoffmaterial, wie zum Beispiel Polsterwatte oder Schaumstoff, vorgesehen ist, die bevorzugt mit dem Kerngrundkörper verbunden, insbesondere verklebt wird. Dabei sollte die oberhalb des Kerngrundkörpers gegebenenfalls vorgesehene Schicht einen geringeren Härtegrad als das untere Kerngrundkörperteil oder des Kerngrundkörpers aufweisen. Wird unterhalb des Kerngrundkörpers eine weitere Schicht vorgesehen, sollte diese einen größeren Härtegrad als der Kerngrundkörper bzw. das untere Kerngrundkörperteil oder zumindest den gleichen Härtegrad haben. Bei dieser Ausführungsform wird letztlich in Art eines modularen Basisteils der Kerngrundkörper zur Verfügung gestellt, wobei dann anwenderseitig durch ober- und/oder unterseitige weitere Schichten ein Schaumstoffkern für den jeweiligen Einsatzzweck hergestellt wird.

Darüber hinaus betrifft die Erfindung ein Polster, auch in Form einer Matratze oder Auflage, mit einem Schaumstoffkern der vorgenannten Art. Das Polster bzw. die Matratze oder Auflage weist - in an sich bekannter Weise - einen äußeren Bezug auf, in den der Schaumstoffkern eingebracht ist. Zwischen dem äußeren Bezug und dem Schaumstoffkern kann ober- und/oder unterseitig wenigstens eine weitere Schicht aus Polsterwatte und/oder einem Schaumstoff vorgesehen sein, wobei unmittelbar unterhalb des Bezugs ein Spannstoff, insbesondere ein Vlies, vorzugsweise ein Polyestervlies vorgesehen sein kann.

Schließlich betrifft die vorliegende Erfindung ein Polstermöbel in Form eines Sitz- oder Liegemöbels oder einen Fahrzeugsitz mit wenigstens einem Schaumstoffkern der vorgenannten Art oder einem Polster der vorgenannten Art. Bei dem Liegemöbel handelt es sich insbesondere um ein Bett. Das Polstermöbel bzw. der Fahrzeugsitz weist jeweils ein Sitzteil, ein Liegeteil, eine Matratze und/oder eine Rückenlehne auf. Im Bereich des Sitzteils oder des Liegeteils oder der Matratze und/oder der Rückenlehne ist als Auflage bzw. Anlage für das Polster bzw. die Matratze oder Auflage bzw. den Schaumstoffkern eine erste Zarge und auf der gegenüberliegenden Seite eine zweite Zarge vorgesehen. Die Zargen können Bestandteil eines umlaufenden Rahmens, auch in Form einer Art Schale oder dergleichen, sein. Wesentlich ist diesem Zusammenhang ist, dass sich die Enden der Federleisten über die erste und die zweite Zarge hinaus erstrecken, so dass die erste und die zweite Zarge als zumindest mittelbare Abstützung auch für die Federleisten dienen. In konstruktiver Hinsicht ist die Länge der Federleisten größer als der lichte Abstand der ersten und der zweiten Zarge voneinander.

Von besonderer Bedeutung im Zusammenhang mit einem erfindungsgemäßen Polstermöbel (Sitz- oder Liegemöbel) oder Fahrzeugsitz ist, dass auf eine Unterfederung, insbesondere auf Gurte, Wellenfedern, Holzplatten oder auch auf einen Federkern grundsätzlich verzichtet werden kann. Letztlich kann bei der Erfindung die Unterseite des Polsters, auch in Form einer Matratze oder Auflage, bzw. des Schaumstoffkerns den unteren funktionalen Abschluss des Polsteraufbaus des Polstermöbels bzw. Fahrzeugsitzes bilden.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst.

Es zeigt
- Fig. 1: eine perspektivische, teilweise aufgeschnittene Ansicht eines erfindungsgemäßen Polstermöbels,
- Fig. 2: eine perspektivische Ansicht eines Fahrzeugsitzes mit angedeuteten Federleisten,
- Fig. 3: eine perspektivische Ansicht eines vorderseitig geschnittenen erfindungsgemäßen Schaumstoffkerns,
- Fig. 4: eine Schnittansicht eines erfindungsgemäßen Schaumstoffkerns in Draufsicht,
- Fig. 5: eine der Fig. 3 entsprechende Ansicht einer anderen Ausführungsform eines erfindungsgemäßen Schaumstoffkerns,
- Fig. 6: eine der Fig. 3 entsprechende weitere Ausführungsform eines erfindungsgemäßen Schaumstoffkerns,
- Fig. 7: eine schematische Schnittdarstellung eines erfindungsgemäßen Schaumstoffkerns in Draufsicht im auf ein Sitzteil aufgelegten Zustand,
- Fig. 8: eine schematische Schnittansicht eines erfindungsgemäßen Schaumstoffkerns in Seitenansicht im auf ein Sitzteil aufgelegten Zustand,
- Fig. 9: eine schematische Schnittansicht eines Schaumstoffkerns für einen Fahrzeugsitz,
- Fig. 10: eine Draufsicht auf eine erfindungsgemäße Federleiste mit unterschiedlicher Lochung,
- Fig. 11: eine Querschnittsansicht der Federleiste aus Fig. 10 in Pfeilrichtung A-A,
- Fig. 12: eine Draufsicht auf den Faserkern einer Federleiste und
- Fig. 13: eine Schnittansicht eines Teils einer erfindungsgemäßen Federleiste

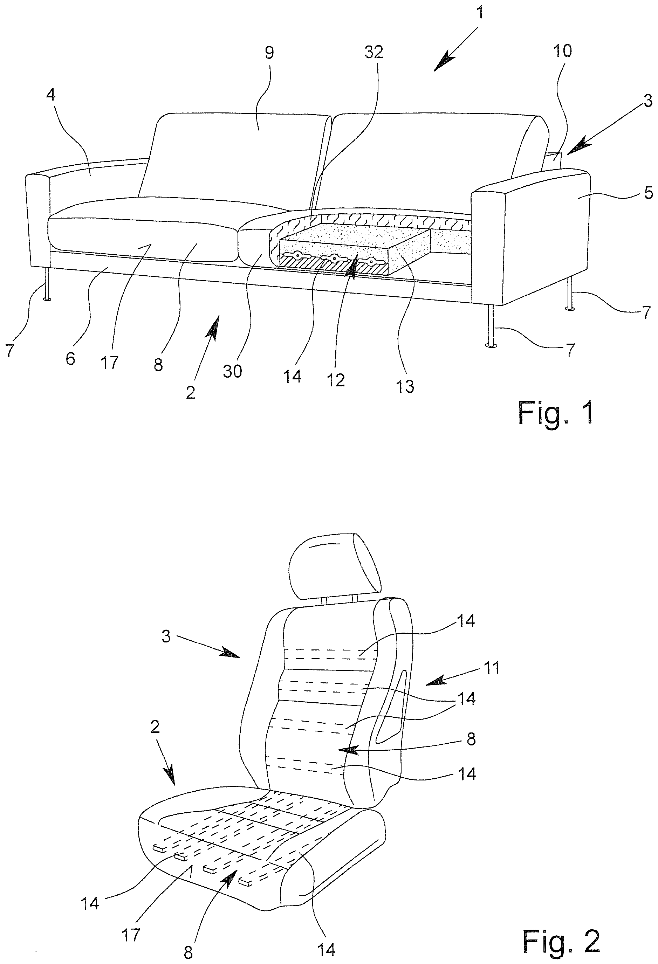

In Fig. 1 ist ein Polstermöbel 1 dargestellt, wobei es sich vorliegend um ein Sofa handelt. Das Sofa weist ein Sitzteil 2 und eine Rückenlehne 3 sowie Seitenwangen 4, 5 auf. Die Seitenwangen 4, 5 sind Teil eines Grundkörpers 6, der über entsprechende Füße 7 auf dem Boden aufsteht. Das Sitzteil 2 weist vorliegend zwei Polster 8 auf, während die Rückenlehne 3 ebenfalls zwei Polster 9 aufweist. Die Polster 8 des Sitzteils 2 sind dabei auf den Grundkörper 6 aufgelegt, während die Polster 9 der Rücklehne 3 an einer hinteren Wange 10 des Grundkörpers 6 anliegen. Bei den Polstern 8, 9 des Polstermöbels 1 handelt es sich vorliegend um separate Elemente, die vorliegend vom Grundkörper 6 abnehmbar sind. Grundsätzlich ist es aber auch möglich, dass die Polster 8 und/oder 9 nach der Fertigung des Polstermöbels 1 nicht abnehmbar sind.

In Fig. 2 ist ein Fahrzeugsitz 11 dargestellt, der ebenfalls ein Sitzteil 2 und eine Rückenlehne 3 aufweist. Hierbei ist die Rückenlehne 3 gegenüber dem Sitzteil 2 verschwenkbar. Das Sitzteil 2 und auch die Rückenlehne 3 des Fahrzeugsitzes 11 weisen jeweils ein Polster 8 auf, das aber jeweils fest mit dem Sitzteil 2 bzw. der Rückenlehne 3 verbunden ist. Anders als bei der Ausführungsform des Polstermöbels 1 sind die Polster 8 beim Fahrzeugsitz 11 nicht abnehmbar sondern integraler Bestandteil des Sitzteils 2 und der Rückenlehne 3.

Bei beiden Ausführungsformen ist es so, dass das Polster 8 einen Schaumstoffkern 12 aufweist. Der Schaumstoffkern 12 hat einen Kerngrundkörper 13 aus Schaumstoffmaterial. Bei dem Schaumstoffmaterial des Kerngrundkörpers des Polstermöbels 1 handelt es sich vorliegend um Kaltschaum, insbesondere aus PU oder PUR, während es sich bei dem Kerngrundkörper 13 des Polsters 8 des Sitzteils 2 für den Fahrzeugsitz 11 um Formschaum, insbesondere aus PU oder PUR, handelt. Auch die Verwendung von Komfortschaum, Viscoschaum oder Latex bzw. Latexschaum ist möglich.

Die vorstehenden und auch die nachfolgenden Ausführungen gelten nicht nur für ein Polster eines Sitzteils, sondern in gleicher Weise auch für ein Polster eines Liegeteils und eine Matratze oder Auflage eines Liegemöbels, insbesondere eines Betts. Letztlich stellt eine Matratze oder eine Auflage eines Liegemöbel nichts anderes als ein Polster des diesbezüglichen Möbels dar.

Wesentlich ist nun, und dies gilt sowohl für die Ausführungsform des Polstermöbels 1 als auch für die Ausführungsform des Fahrzeugsitzes 11, dass im Kerngrundkörper 13 eine Mehrzahl von vorzugsweise zumindest im Wesentlichen parallel zueinander verlaufenden Federleisten 14 vorgesehen sind.

Hinzuweisen ist darauf, dass die im Kerngrundkörper 13 vorgesehenen Federleisten 14 jeweils die identische Form und Ausbildung haben. Allerdings ist es auch möglich, dass im Kerngrundkörper unterschiedliche Federleisten vorgesehen sind. So sind beispielsweise unterschiedlich breite Leisten und/oder Leisten mit unterschiedlichen Federeigenschaften ohne weiteres möglich. Dabei sind bei der dargestellten Ausführungsform des Polstermöbels 1 lediglich in den Polstern 8 des Sitzteils 2 Federleisten 14 vorgesehen, in den Polstern 9 der Rückenlehne 3 jedoch nicht. Allerdings können die Polster 9 der Rückenlehne 3 ebenfalls mit Federleisten 14 versehen sein. Bei der Ausführungsform des Fahrzeugsitzes 11 sind in den Polstern 8 sowohl des Sitzteils 2 als auch der Rückenlehne 3 Federleisten 14 vorgesehen.

Die Federleisten 14, die federelastische Eigenschaften haben, erstrecken sich längs oder quer zwischen der vorderen und der hinteren Stirnseite 15, 16 des Kerngrundkörpers 13. Bezogen auf das Polstermöbel 1 bzw. den Fahrzeugsitz 11 verlaufen die Federleisten 14 entweder längs oder aber quer zur vorderen Stirnfläche 17 des Sitzteils 2. In dem dargestellten Ausführungsbeispiel verlaufen die Federleisten 14 im Sitzteil 2 quer zur vorderen Stirnfläche 17, während die Federleisten 14 des Polsters 8 der Rückenlehne 3 des Fahrzeugsitzes 11 parallel zur vorderen Stirnfläche 17 des Sitzteils 2 verlaufen. Statt der dargestellten Anordnung der Rückenleisten 14 können diese aber auch senkrecht, also um 90° zur dargestellten Anordnung versetzt, angeordnet sein. Im Übrigen sind die Federleisten 14 jedenfalls bei der Polstermöbel-Ausführungsform zumindest im Wesentlichen parallel zur Oberseite 18 und/oder zur Unterseite 19 des Kerngrundkörpers 13 angeordnet. Bei der Fahrzeugsitz-Ausführungsform sind die Federleisten 14 in einer horizontalen Ebene zur Ober- und/oder Unterseite des Kerngrundkörpers 13 angeordnet.

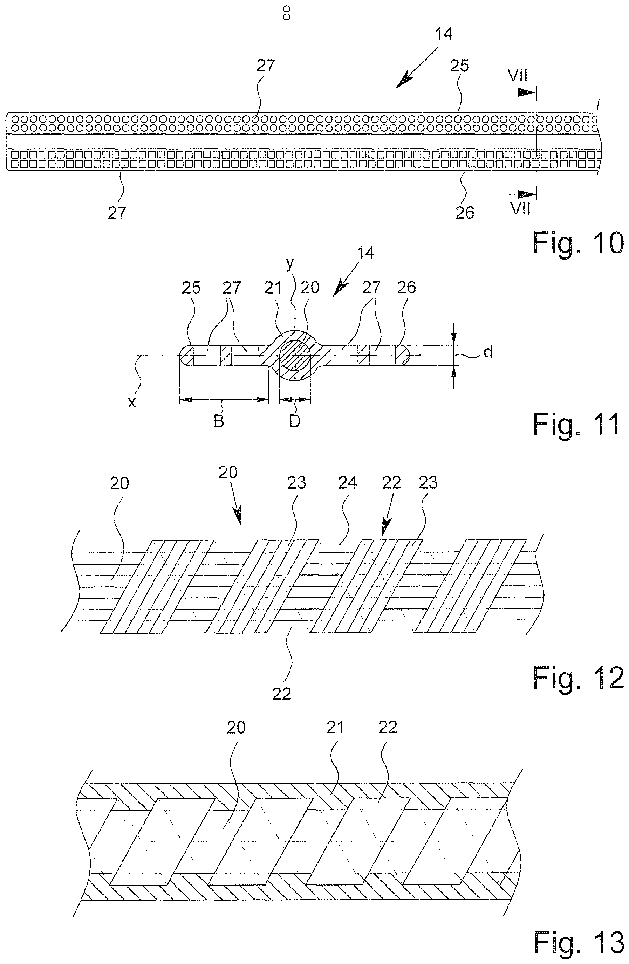

Die Fig. 10 bis 13 zeigen den Aufbau einer Federleiste 14. Die Federleisten 14, die im Schaumstoffkern 12 bzw. Kerngrundkörper 13 aufgenommen und darin integriert sind, können grundsätzlich baugleich ausgeführt sein, können aber auch eine unterschiedliche Härte aufweisen, insbesondere zu den Seiten hin weicher ausgeführt sein. Jede der Federleisten 14 weist einen Faserkern 20 aus einem Fasermaterial, insbesondere aus Glasfasern, und einen den Faserkern 20 umgebenden Mantel 21 aus einem thermoplastischen Kunststoff, insbesondere aus Polypropylen, auf. Der Mantel 21 bildet dabei die Matrix für den Faserkern 20. Jede der Federleisten 14 weist eine langgestreckte Form auf. Die Stabilität und Tragfähigkeit der Federleiste 14 wird im Wesentlichen durch den Faserkern 20 gewährleistet. Der Faserkern 20 bildet einen Strang, der jedenfalls bei der in Fig. 11 dargestellten Ausführungsform einen zumindest im Wesentlichen kreisrunden Vollquerschnitt aufweist. Grundsätzlich ist es auch möglich, dass der Faserkern 20 andere Querschnittsformen aufweist. So ist beispielsweise eine elliptische Querschnittsform möglich. Durch eine stehende oder liegende Anordnung innerhalb des Mantels 21 lassen sich dann entsprechende Tragfähigkeits- und Federeigenschaften der Federleiste 14 realisieren. Des Weiteren sind auch eckige, insbesondere rechteckige Querschnittsformen des Faserkerns 20 möglich. Außerdem lassen sich die vorgenannten Eigenschaften auch durch eine Veränderung des Durchmessers D des Faserkerns 20 beeinflussen.

Wie sich aus den Fig. 12 und 13 ergibt, ist um den strangförmigen Faserkern 20 eine den Faserkern 20 umgebende Wicklung 22 vorgesehen. Die Wicklung 22 besteht aus dem gleichen Material wie der Faserkern 20. Benachbarte Windungen 23 der Wicklung 22 sind berührungsfrei voneinander beabstandet. Auf diese Weise ergeben sich Zwischenräume 24 zwischen benachbarten Windungen 23. Die Zwischenräume 24 bilden in Längsrichtung des Faserkerns 20 Hinterschnitte für das Material des Mantels 21, so dass sich letztlich eine Art Verzahnung ergibt. Dies führt, wie sich dies insbesondere aus Fig. 13 ergibt, zu einem Formschluss zwischen dem Material des Mantels 21 und dem Faserkern 20. Hierdurch wird die Verbindung zwischen dem Material des Mantels 21 und dem Faserkern 20, die sich im Wesentlichen auch durch das Aufschrumpfen des äußeren Materials auf das innere Material bei der Herstellung ergibt, verbessert.

Fig. 11 verdeutlicht, dass vom Mantel 21, der im Wesentlichen kreisringförmig ausgebildet ist, auf gegenüberliegenden Seiten jeweils ein Leistenschenkel 25, 26 absteht. Die Leistenschenkel 25, 26 erstrecken sich in radialer Richtung vom Mantel 21 weg. Die Breite B des Leistenschenkels 25, 26 ist im dargestellten Ausführungsbeispiel um mehr als den Faktor 2, vorliegend etwa um den Faktor 2,5, größer als der Durchmesser D des Faserkerns 20, nämlich bevorzugt um den Faktor 4 bis 5. Im Übrigen ist die Dicke d des Leistenschenkels 25, 26 deutlich geringer als der Durchmesser D des Faserkerns 20. Im Ergebnis ergibt sich damit eine Federleiste 14 mit einem verdickten mittigen Bereich und relativ schmalen, langgestreckten Leistenschenkeln 25, 26, die sich über die gesamte Länge der Federleiste 14 erstrecken. Aufgrund der relativen langen Leistenschenkel 25, 26 ergibt sich eine gute Verbindungsmöglichkeit der Leistenschenkel 25, 26 mit dem umgebenden Schaumstoff des Kerngrundkörpers 13.

Im Übrigen ergibt sich aus Fig. 11, dass die Federleiste 14 im Querschnitt gesehen um eine durch die Leistenschenkel 25, 26 gelegte Schenkelmittelachse x und um eine zur Schenkelmittelachse x senkrecht verlaufende, durch den Durchmesser D des Faserkerns 20 gelegte Kernmittelachse y spiegelsymmetrisch ist. Diese Symmetrie vereinfacht die Herstellung des erfindungsgemäßen Schaumstoffkerns 12, da auf eine bestimmte Ausrichtung der Federleisten 14 bei der Herstellung des Schaumstoffkerns 12 nicht geachtet werden muss.

Wie sich im Übrigen insbesondere aus Fig. 10 ergibt, sind in jedem Leistenschenkel 25, 26 eine Vielzahl von Öffnungen 27 vorgesehen. Die Öffnungen 27 sind in regelmäßigen Abständen und/oder in sich wiederholender Anordnung in den Leistenschenkels 25, 26 vorgesehen. Bei der in Fig. 10 dargestellten Ausführungsform haben die Öffnungen 27 im Leistenschenkel 25 eine runde Form, während im Leistenschenkel 26 rechteckige Öffnungen 27 vorgesehen sind. Diese Art der Anordnung von Öffnungen 27 dient nur zur Darstellung von Möglichkeiten der Ausbildung von Öffnungen 27. In der Regel haben die Öffnungen 27 in beiden Leistenschenkeln 25, 26 bei einer Federleiste 14 die gleiche Öffnungsform. Jedenfalls sollte aber die freie Öffnungsfläche, das heißt die Summe der Öffnungsflächen aller Öffnungen 27, relativ groß sein. In jedem Falle sollte die frei Öffnungsfläche der Öffnungen 27 in Bezug auf die Gesamtfläche des jeweiligen Leistenschenkels 25, 26 größer 20% sein.

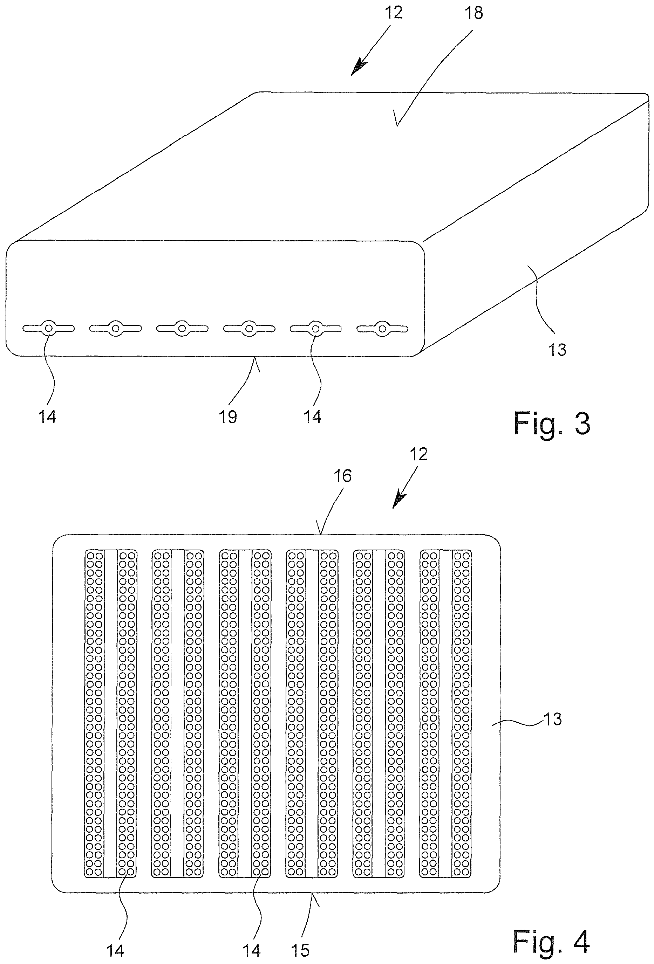

In Fig. 3 ist ein Schaumstoffkern 12 dargestellt, wobei die Federleisten 14 in den Kerngrundkörper 13 eingeschäumt worden sind. Bei dem verwendeten Schaummaterial handelt es sich um Formschaum. Die Federleisten 14 befinden sich bei der Ausführungsform gemäß Fig. 3 im Bereich des unteren Drittels des Kerngrundkörpers 13, wobei das Schaumstoffmaterial oberhalb und unterhalb der Federleisten 14 identisch ist. Wie sich aus Fig. 4 ergibt, erstrecken sich die Federleisten 14 von der vorderen Stirnseite 15 zur hinteren Stirnseite 16, wobei die jeweiligen Enden der Federleisten 14 nicht offen liegen, sondern auch vom Schaumstoffmaterial des Kerngrundkörpers 13 eingeschlossen sind. Hinzuweisen ist aber darauf, dass es grundsätzlich auch möglich ist, dass die beiden Enden der jeweiligen Federleisten 14 offen an der vorderen Stirnseite 15 und/oder der hinteren Stirnseite 16 des Kerngrundkörpers 13 liegen, also für einen Betrachter sichtbar sind.

Der in Fig. 3 dargestellte Schaumstoffkern ist für ein Polster eines Sitzteils 2 vorgesehen. Im Falle einer Matratze oder Auflage ist lediglich die Länge des Schaumstoffkerns 12 und die Anzahl der Federleisten 4 größer. Ansonsten bestehen von Art und Aufbau keinerlei Unterschiede, worauf eingangs bereits hingewiesen worden ist.

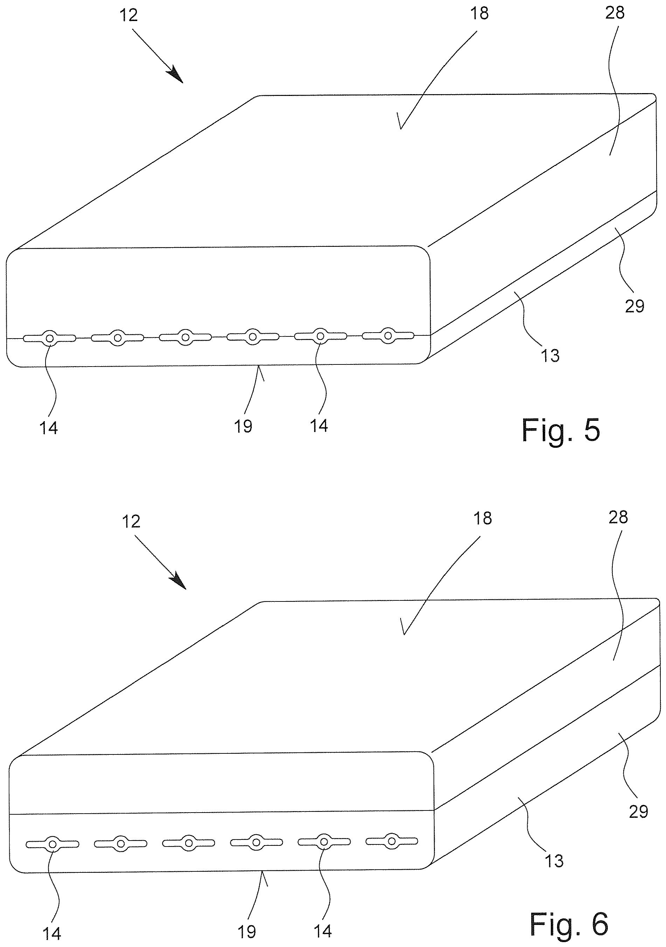

Bei der in Fig. 5 dargestellten Ausführungsform ist der Kerngrundkörper 13 in anderer Weise hergestellt worden. Der Kerngrundkörper 13 weist hierbei einen oberen Kerngrundkörperteil 28 und einen unteren Kerngrundkörperteil 29 auf. Es handelt sich vorliegend um Schnittschaumstoff, beispielsweise aus Kaltschaum. Beide Kerngrundkörperteile haben die gleiche Grundfläche, aber eine unterschiedliche Dicke. Zur Herstellung des Schaumstoffkerns 12 wird auf die Oberseite des unteren Kerngrundkörperteils 29 Klebstoff aufgebracht. Anschließend werden die Federleisten 14 in der gewünschten Anordnung aufgelegt. Auf die Oberseite der Federleisten 14 wird dann nochmals Klebstoff aufgebracht. Dann wird das obere Kerngrundkörperteil 28 aufgelegt und mit dem unteren Kerngrundkörperteil 30 und den dazwischenliegenden Federleisten 24 verpresst und somit verklebt.

Sowohl beim Verschäumen als auch bei der zuvor beschriebenen Herstellungsmethode mittels Verkleben dienen die Öffnungen 27 zur festen Verbindung der Federleisten 14 mit dem Schaumstoffmaterial, nämlich beim Einschäumen dadurch, dass der Schaumstoff durch die Öffnungen 27 hindurchdringt, während bei der anderen Ausführungsform der Klebstoff durch die Öffnungen 27 hindurchdringt.

Statt der in Fig. 5 beschriebenen Herstellungsmethode ist es grundsätzlich auch möglich, das obere Kerngrundkörperteil 28 oder das untere Kerngrundkörperteil 29 durch einen Schäumvorgang herzustellen, wobei die betreffenden Federleisten 14 dann an der jeweiligen Unterseite bzw. Oberseite frei liegen. Anschließend kann das andere Kerngrundkörperteil durch eine Klebverbindung mit dem durch Schäumen hergestellten Kerngrundkörperteil verbunden werden.

Im Übrigen kann bei der in Fig. 5 dargestellten Ausführungsform der untere Kerngrundkörperteil 29 einen höheren Härtegrad als das obere Kerngrundkörperteil 28 haben. Der höhere Härtegrad kann beispielsweise durch eine dichteres Kunststoffmaterial oder ein anderes Kunststoffmaterial mit entsprechendem erhöhten Härtegrad erzeugt werden. Bevorzugt sollte es jedenfalls so sein, dass zumindest der Teil des Schaumstoffmaterials des Kerngrundkörpers, das sich unterhalb der Ebene der Federleisten 14 befindet, härter ist, also einen höheren Härtegrad aufweist, als der Bereich des Schaumstoffkerns, der sich an der Oberseite 18 befindet. Eine diesbezügliche Ausführungsform ist in Fig. 6 dargestellt. Dort ist beispielsweise der Kerngrundkörper 13 durch Schäumen mit einem Schaum mit höherem Härtegrad hergestellt worden. Dieser geschäumte Teil bildet letztlich den unteren Kerngrundkörperteil 29. Auf diesen aufgebracht und beispielsweise über eine Klebverbindung verbunden, ist der obere Kerngrundkörperteil 28 als weitere Schicht.

Darauf hinzuweisen ist, dass es grundsätzlich möglich ist, ober- und/oder unterseitig des die Federleisten 14 aufweisenden Grundkörperteils weitere Schichten vorzusehen, wobei die oberseitig vorgesehenen Schichten grundsätzlich einen geringeren Härtegrad aber auch den gleichen Härtgrad wie die im unteren Bereich des Kerngrundkörpers 13 vorgesehenen Schichten haben können.

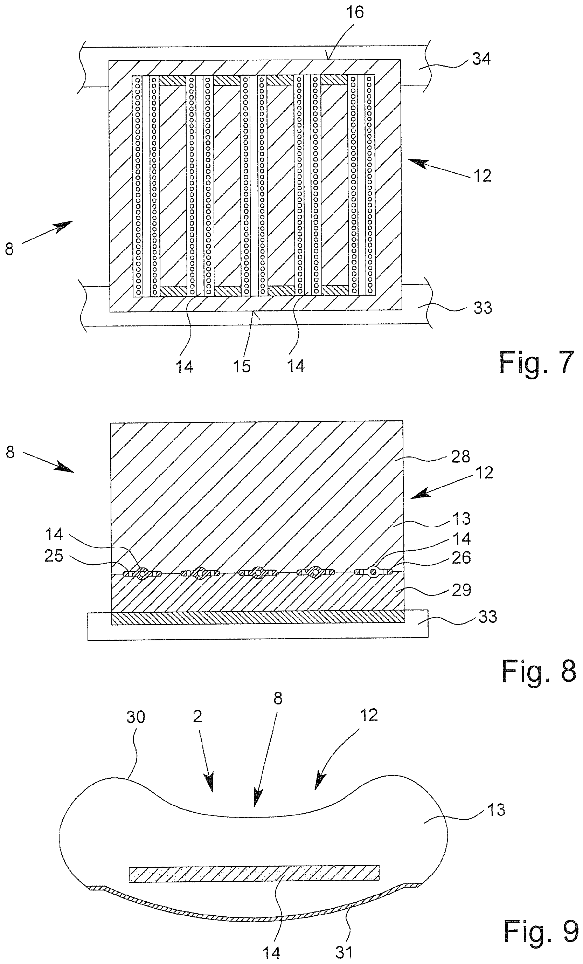

In Fig. 7 und 8 ist eine Ausführungsform dargestellt, bei der in der Ebene der Federleisten 14 randseitig in Art eines Rahmens umlaufend ein Bereich des Kerngrundkörpers 13 mit einem höheren Härtegrad vorgesehen ist als der Härtegrad des Schaumstoffs des oberen Kerngrundkörperteils. Die Federleisten 14 sind hierbei nicht nur auf das untere Kerngrundkörperteil 29 aufgelegt, sondern liegen auch mit den Leistenschenkeln 25, 26 vollflächig auf dem Material des unteren Kerngrundkörperteils 29 auf und sind teilweise darin eingebettet. Hierdurch ergibt sich dann die verstärkte Rahmenfunktion.

Während der Schaumstoffkern 12 bei der Polstermöbel-Ausführungsform im Wesentlichen eine Rechteckform hat, handelt es sich bei dem Schaumstoffkern 12 für den Fahrzeugsitz 11, und zwar sowohl was das Sitzteil 2 als auch die Rückenlehne 3 angeht, eher um einen schalenartigen Körper mit seitlichen Wangen. Bei der in Fig. 9 dargestellten Ausführungsform handelt es sich um eine Querschnittsansicht des Polsters 8 für die Rückenlehne 3, wobei die Federelemente 14 quer zu den Wangen der Rückenlehne 3 verlaufen, während die Federleisten 14 bei dem Sitzteil 2 zumindest im Wesentlichen in Richtung der Sitzwangen ausgerichtet sind. Auf der dem Benutzer zugewandten Seite weist das Polster 8 bei der Ausführungsform gemäß Fig. 9 einen Bezug 30 auf, während auf der dem Benutzer abgewandten Seite ein Metallteil 31, das letztlich eine Abstützung für den Schaumstoffkern 12 und auch die Federleisten 14 bildet, vorgesehen ist.

Die Ausführungsform gemäß Fig. 1 verdeutlicht, dass das Polster 8 ebenfalls einen äußeren Bezug 30 aufweist. Des Weiteren ist zwischen dem Schaumstoffkern 12 und dem Bezug 30 eine Schicht 32 mit Polsterwatte vorgesehen. Zwischen der Schicht 32 und dem Bezug 30 kann noch ein Spannstoff in Form eines Vlieses, insbesondere Polyestervlieses vorgesehen sein.

In den Fig. 7 und 8 ist das Prinzip der Anordnung bzw. Abstützung des Schaumstoffkerns 1 am Sitzteil 2 oder der Rückenlehne 3 dargestellt. Die nachfolgenden Ausführungen beziehen sich auf das Sitzteil 2 des Polstermöbels 1, gelten jedoch in gleicher Weise für die Ausführungsform mit dem Fahrzeugsitz 11, und zwar sowohl für das Sitzteil 2 als auch für die Rückenlehne 3.

Das Sitzteil 2 weist vorliegend am Grundkörper 6 eine erste Zarge 33 und eine zweite Zarge 34 auf. Die erste Zarge 33 ist benachbart der vorderen Stirnfläche 17 während die zweite Zarge 34 der ersten Zarge 33 gegenüberliegend und benachbart der Rückenlehne 3 vorgesehen ist. Im Bereich der Rückenlehne 3 des Fahrzeugsitzes 1 befinden sich die abstützenden Zargen seitlich an einem starren Teil der Rückenlehne, beispielsweise an einem Rahmen.

Die Fig. 7 verdeutlicht, dass das Polster 8 auf die Zargen 33, 34 aufgelegt ist, sich darauf also abstützt. Dabei haben die Federleisten 14 eine solche Länge, dass sie mit ihren Enden - in Draufsicht gesehen - die Zargen 33, 34 ebenfalls überdecken. Die Länge der Federleisten 14 ist also größer als lichte Abstand der beiden Zargen 33, 34 zueinander. Bei entsprechender Belastung des Polsters 8 stützen sich damit auch die Federleisten 14 an ihren Enden auf den jeweiligen Zargen 33, 34 jedenfalls mittelbar ab.

Im Übrigen ist es so, dass unterhalb des Polsters 8 jedenfalls bei der Polstermöbel-Ausführungsform keine Unterfederung oder ein Federkern vorgesehen ist. Die Unterseite des Polsters 8 bildet den unteren Abschluss des Polsteraufbaus jedenfalls in funktionaler Hinsicht. Es versteht sich, dass eine untere Unterspannung vorgesehen sein kann, die jedoch in Bezug auf die Polsterung keine Trag- oder Federeigenschaften übernimmt. Entsprechendes gilt bei Liegemöbeln, wenn es sich bei dem Polster 8 um eine Matratze oder Auflage handelt.

**Bezugszeichenliste:**

| | | | |
|---|---|---|---|
| 1 | Polstermöbel | 22 | Wicklung |
| 2 | Sitzteil | 23 | Windung |
| 3 | Rückenlehne | 24 | Zwischenraum |
| 4 | Seitenwange | 25 | Leistenschenkel |
| 5 | Seitenwange | 26 | Leistenschenkel |
| 6 | Grundkörper | 27 | Öffnung |
| 7 | Fuß | 28 | oberer Kerngrundkörperteil |
| 8 | Polster | 29 | unterer Kerngrundkörperteil |
| 9 | Polster | 30 | Bezug |
| 10 | Wange | 31 | Metallteil |
| 11 | Fahrzeugsitz | 32 | Schicht |
| 12 | Schaumstoffkern | 33 | erste Zarge |
| 13 | Kerngrundkörper | 34 | zweite Zarge |
| 14 | Federleiste | | |
| 15 | vordere Stirnseite | | |
| 16 | hintere Stirnseite | B | Breite |
| 17 | vordere Stirnfläche | D | Durchmesser |
| 18 | Oberseite | d | Dicke |
| 19 | Unterseite | x | Schenkelmittelachse |
| 20 | Faserkern | y | Kernmittelachse |
| 21 | Mantel | | |

## Patentansprüche

1. Schaumstoffkern (12) für ein Polster (8, 9) eines Sitzteils (2) oder eines Liegeteils oder einer Rückenlehne (3) eines Polstermöbels (1) oder eines Fahrzeugsitzes (11) oder für eine Matratze oder Auflage eines Liegemöbels, mit einem Kerngrundkörper (13) aus Schaumstoffmaterial, insbesondere aus Kaltschaum, Viscoschaum, Latexschaum oder Formschaum, wobei im Kerngrundkörper (13) eine Mehrzahl von vorzugsweise zumindest im Wesentlichen parallel zueinander verlaufenden Federleisten (14) vorgesehen sind,
**dadurch gekennzeichnet,**
**dass** wenigstens eine Federleiste (14) einen insbesondere pultrudierten, vorzugsweise Glasfasern aufweisenden Faserkern (20) und einen den Faserkern (20) umgebenden Mantel (21) aus einem thermoplastischen Kunststoff, insbesondere aus Polypropylen, aufweist und
**dass** die Federleisten (14) in den Kerngrundkörper (13) derart eingeschäumt sind, dass sich ein Schichtaufbau in der Form Schaumstoff - Federleisten (14) - Schaumstoff ergibt.

2. Schaumstoffkern (12) für ein Polster (8, 9) eines Sitzteils (2) oder eines Liegeteils oder einer Rückenlehne (3) eines Polstermöbels (1) oder eines Fahrzeugsitzes (11) oder für eine Matratze oder Auflage eines Liegemöbels, insbesondere nach Anspruch 1, mit einem Kerngrundkörper (13) aus Schaumstoffmaterial, insbesondere aus Kaltschaum, Viscoschaum, Latexschaum oder Formschaum, wobei im Kerngrundkörper (13) eine Mehrzahl von vorzugsweise zumindest im Wesentlichen parallel zueinander verlaufenden Federleisten (14) vorgesehen sind,
**dadurch gekennzeichnet,**
**dass** wenigstens eine Federleiste (14) einen insbesondere pultrudierten, vorzugsweise Glasfasern aufweisenden Faserkern (20) und einen den Faserkern (20) umgebenden Mantel (21) aus einem thermoplastischen Kunststoff, insbesondere aus Polypropylen, aufweist und
**dass** die Federleisten (14) zwischen einem oberen Kerngrundkörperteil (28) und einem unteren Kerngrundkörperteil (29) angeordnet sind, wobei das obere Kerngrundkörperteil (28) und das untere Kerngrundkörperteil (29) an ihren einander zugewandten Flächen miteinander verklebt sind.

3. Schaumstoffkern nach Anspruch 1 oder 2, **dadurch gekennzeichnet, dass** die Federleisten (14) sich längs oder quer zwischen der vorderen und hinteren Stirnseite (15, 16) des Kerngrundkörpers (13) erstrecken; und/oder dass die Federleisten (14) zumindest im Wesentlichen parallel oder in einer horizontalen Ebene zur Ober- und/oder Unterseite des Kerngrundkörpers (13) angeordnet sind.

4. Schaumstoffkern nach einem der vorhergehenden Ansprüche, **dadurch gekennzeichnet, dass** vom Mantel (21) auf gegenüberliegenden Seiten jeweils ein Leistenschenkel (25, 26) absteht.

5. Schaumstoffkern nach einem der vorhergehenden Ansprüche, **dadurch gekennzeichnet, dass** die Breite (B) des Leistenschenkels (25, 26) größer ist, vorzugsweise um das 1,5-fache, weiter bevorzugt um wenigstens das 2-fache und insbesondere um das 2,4-fache bis 3-fache, als der Durchmesser (D) des Faserkerns (20); und/oder dass die maximale Dicke (d) des Leistenschenkels (25, 26) geringer ist, vorzugsweise um wenigstens das 2-fache, weiter bevorzugt um wenigstens das 3-fache und insbesondere um das 4- bis 8-fache, als der Durchmesser (D) des Faserkerns (20) und/oder dass die Federleiste (14) um eine im Querschnitt durch die Leistenschenkel (25, 26) gelegte Schenkelmittelachse (x) und/oder um eine zur Schenkelmittelachse (x) senkrecht verlaufende, durch den Faserkern (20) gelegte Kernmittelachse (y) spiegelsymmetrisch ist.

6. Schaumstoffkern nach einem der vorhergehenden Ansprüche, **dadurch gekennzeichnet, dass** der Faserkern (20) der Federleiste (14) einen Faserkernstrang, vorzugsweise mit einem im Wesentlichen kreisrunden Querschnitt, und eine den Faserkernstrang zumindest bereichsweise spiralförmig umgebende Wicklung (22) aufweist, vorzugsweise wobei benachbarte Windungen (23) der Wicklung (22) berührungsfrei voneinander beabstandet sind, so dass sich Zwischenräume (24) zur Verzahnung mit dem Mantelmaterial ergeben.

7. Schaumstoffkern nach einem der vorhergehenden Ansprüche, **dadurch gekennzeichnet, dass** im Kerngrundkörper (13) insbesondere von den äußeren Abmaßen identische, jedoch unterschiedliche Elastizitäten aufweisende Federleisten (14) vorgesehen sind.

8. Schaumstoffkern nach einem der vorhergehenden Ansprüche, **dadurch gekennzeichnet, dass** in jedem Leistenschenkel (25, 26) eine Vielzahl von Öffnungen (22) vorgesehen sind, insbesondere wobei die Öffnungen (37) in regelmäßigen Abständen und/oder in sich wiederholender Anordnung im Leistenschenkel (25, 26) vorgesehen sind, insbesondere wobei das Verhältnis der freien Öffnungsfläche der Öffnungen (27) auf der zugehörigen Leistenschenkelfläche zur Leistenschenkelfläche zwischen 10% bis 80%, vorzugsweise 20% bis 70%, weiter bevorzugt 30% bis 60% und insbesondere zwischen 40% und 50% liegt.

9. Schaumstoffkern nach einem der vorhergehenden Ansprüche, **dadurch gekennzeichnet, dass** das untere Kerngrundkörperteil (28) einen höheren Härtegrad, insbesondere mit einem dichteren Kunststoffmaterial oder den gleichen Härtegrad wie das obere Kerngrundkörperteil (29) aufweist; und/oder dass in der Ebene der Federleisten (14) randseitig, insbesondere rahmenartig umlaufend, ein Bereich des Kerngrundkörpers (13) mit einem höheren Härtegrad, insbesondere mit dichterem Schaumstoffmaterial, als das obere Kerngrundkörperteil (28) vorgesehen ist.

10. Schaumstoffkern nach einem der vorhergehenden Ansprüche, **dadurch gekennzeichnet, dass** die Federleisten (14) im mittigen Bereich oder im untermittigen Bereich, insbesondere im unteren Drittel bis unteren Fünftel des Kerngrundkörpers (13) angeordnet sind.

11. Schaumstoffkern nach einem der vorhergehenden Ansprüche, **dadurch gekennzeichnet, dass** der Kerngrundkörper (13) ober- und/oder unterseitig wenigstens eine weitere Schicht aus einem Polstermaterial, vorzugsweise Schaumstoffmaterial aufweist, vorzugsweise mit diesem verbunden, weiter bevorzugt verklebt ist, insbesondere wobei eine oberhalb des Kerngrundkörpers (13) vorgesehene Schicht einen geringeren Härtegrad als das untere Kernkörpergrundteil (29) oder der Kerngrundkörper (13) aufweist.

12. Polster (8), Matratze oder Auflage mit einem Schaumstoffkern (12) nach einem der vorhergehenden Ansprüche.

13. Polster, Matratze oder Auflage nach Anspruch 12, **dadurch gekennzeichnet, dass** ein äußerer Bezug (30) vorgesehen ist, in den der Schaumstoffkern (12) eingebracht ist; und/oder dass ober- und/oder unterseitig wenigstens eine weitere Schicht aus Polsterwatte und/oder aus einem Schaumstoff vorgesehen ist; und/oder dass zwischen der Unterseite des Bezugs (30) und dem Schaumstoffkern (12), insbesondere unmittelbar an die Unterseite des Bezugs (30) anschließend, ein Spannstoff, insbesondere ein Vlies, und vorzugsweise ein Polyestervlies, vorgesehen ist.

14. Polstermöbel (1), insbesondere Sitz- oder Liegemöbel, oder Fahrzeugsitz (11), mit einem Sitzteil (2) und/oder einem Liegeteil und/oder einer Rückenlehne (3) und/oder wenigstens einer Matratze oder wenigstens einer Auflage, mit wenigstens einem Schaumstoffkern (12) nach einem der vorhergehenden Ansprüche oder wenigstens einem Polster (8) nach einem der vorhergehenden Ansprüche.

15. Polstermöbel, insbesondere Sitz- oder Liegemöbel, oder Fahrzeugsitz nach Anspruch 14, **dadurch gekennzeichnet, dass** das Sitzteil (2) und/oder die Rückenlehne (3) wenigstens eine erste Zarge (33) und auf der gegenüberliegenden Seite eine zweite Zarge (34) zur Abstützung des Schaumstoffkerns (12) oder des Polsters (8) oder einer Matratze oder einer Auflage aufweist, wobei sich die Enden der Federleisten (14) über die erste Zarge (33) und die zweite Zarge (34) hinaus erstrecken.

16. Polstermöbel, insbesondere Sitz- oder Liegemöbel, oder Fahrzeugsitz nach Anspruch 14 oder 15, **dadurch gekennzeichnet, dass** der Schaumstoffkern (12) oder das Polster (8) oder die Matratze oder die Auflage ohne Unterfederung und/oder ohne Federkern ausgebildet ist.

## Claims

1. A foam core (12) for a cushion (8, 9) of a seat part (2), bed part or backrest (3) of an item of upholstered furniture (1) or of a vehicle seat (11), or for a mattress or padding of a bed, comprising a core main body (13) made of foam material, in particular from cold foam, visco foam, latex foam or moulded foam, wherein a plurality of resilient strips (14), preferably extending at least substantially in parallel with one another, are provided in the core main body (13),
**characterised in that**
at least one resilient strip (14) comprises an in particular pultruded fibre core (20), preferably comprising glass fibres, and a covering (21) made of thermoplastic material, in particular polypropylene, that surrounds the fibre core (20), and
**in that** the resilient strips (14) are foamed in the core main body (13) in such a way that a layered structure in the form of foam - resilient strips (14) - foam is produced.

2. The foam core (12) for a cushion (8, 9) of a seat part (2), bed part or backrest (3) of an item of upholstered furniture (1) or of a vehicle seat (11), or for a mattress or padding of a bed, in particular according to claim 1, comprising a core main body (13) made of foam material, in particular from cold foam, visco foam, latex foam or moulded foam, wherein a plurality of resilient strips (14), preferably extending at least substantially in parallel with one another, are provided in the core main body (13),
**characterised in that**
at least one resilient strip (14) comprises an in particular pultruded fibre core (20), preferably comprising glass fibres, and a covering (21) made of thermoplastic material, in particular polypropylene, that surrounds the fibre core (20), and
**in that** the resilient strips (14) are arranged between an upper core main body part (28) and a lower core main body part (29), wherein the upper core main body part (28) and the lower core main body part (29) are glued together on their mutually facing surfaces.

3. The foam core according to either claim 1 or claim 2, **characterised in that** the resilient strips (14) extend longitudinally or transversely between the front and rear end faces (15, 16) of the core main body (13); and/or **in that** the resilient strips (14) are arranged at least substantially in parallel or in a horizontal plane with the top and/or bottom side of the core main body (13).

4. The foam core according to any one of the preceding claims, **characterised in that** one strip leg (25, 26) in each case protrudes from opposite sides of the covering (21).

5. The foam core according to any one of the preceding claims, **characterised in that** the width (B) of the strip leg (25, 26) is greater, preferably 1.5 times greater, more preferably at least 2 times greater and in particular from 2.4 to 3 times greater, than the diameter (D) of the fibre core (20); and/or **in that** the maximum thickness (d) of the strip leg (25, 26) is less, preferably 2 times less, more preferably at least 3 times less and in particular from 4 to 8 times less, than the diameter (D) of the fibre core (20) and/or **in that** the resilient strip (14) is mirror-symmetrical around a leg centre axis (x) positioned in cross section through the strip leg (25, 26) and/or around a core centre axis (y) positioned through the fibre core (20) and extending perpendicularly to the leg centre axis (x).

6. The foam core according to any one of the preceding claims, **characterised in that** the fibre core (20) of the resilient strip (14) comprises a fibre core cord, preferably having a substantially circular cross section, and a coil (22), which surrounds the fibre core cord in a spiral-like manner at least in some regions, preferably wherein adjacent windings (23) of the coil (22) are spaced apart from one another without contacting, such as to produce gaps (24) for interlocking with the covering material.

7. The foam core according to any one of the preceding claims, **characterised in that** resilient strips (14) that in particular have identical outer dimensions but different elasticities are provided in the core main body (13).

8. The foam core according to any one of the preceding claims, **characterised in that** a plurality of openings (22) are provided in each strip leg (25, 26), in particular wherein the openings (37) are provided at regular spacings and/or in a repetitive arrangement in the strip leg (25, 26), in particular wherein the ratio of the free opening area of the openings (27) on the associated strip leg surface to the strip leg surface area is between 10% and 80%, preferably between 20% and 70%, more preferably between 30% and 60% and in particular between 40% and 50%.

9. The foam core according to any one of the preceding claims, **characterised in that** the lower core main body part (28) has a greater hardness, in particular having a denser plastics material, or the same hardness as the upper core main body part (29); and/or **in that**, in the plane of the resilient strips (14), a region of the core main body (13) having a greater hardness, in particular having denser foam material, than the upper core main body part (28) is provided at the edges, in particular circumferential in a frame-like manner.

10. The foam core according to any one of the preceding claims, **characterised in that** the resilient strips (14) are arranged in the central region or in the lower central region, in particular in the lower third to the lower fifth of the core main body (13).

11. The foam core according to any one of the preceding claims, **characterised in that** on the top and/or bottom side the core main body (13) comprises at least one additional layer of cushion material, preferably foam material, preferably connected thereto, more preferably glued thereto, in particular wherein a layer provided above the core main body (13) has a lower hardness than the lower core body main part (29) or the core main body (13).

12. A cushion (8), mattress or padding comprising a foam core (12) according to any one of the preceding claims.

13. The cushion, mattress or padding according to claim 12, **characterised in that** an outer cover (30) is provided, into which the foam core (12) is placed; and/or **in that** at least one additional layer of quilting cotton and/or foam is provided on the top and/or bottom side; and/or in that a stretch material, in particular a nonwoven, and preferably a polyester nonwoven, is provided between the underside of the cover (30) and the foam core (12), in particular directly adjoining the underside of the cover (30).

14. An item of upholstered furniture (1), in particular a seat or a bed, or a vehicle seat (11), comprising a seat part (2) and/or bed part and/or backrest (3) and/or at least one mattress or at least one piece of padding, comprising at least one foam core (12) according to any of the preceding claims or at least one cushion (8) according to any one of the preceding claims.

15. The item of upholstered furniture, in particular a seat or a bed, or a vehicle seat according to claim 14, **characterised in that** the seat part (2) and/or the back rest (3) comprises at least one first frame (33) and, on the opposite side, a second frame (34) for supporting the foam core (12) or cushion (8) or a mattress or padding, wherein the ends of the resilient strips (14) extend beyond the first frame (33) and the second frame (34).

16. The item of upholstered furniture, in particular a seat or a bed, or a vehicle seat according to either claim 14 or claim 15, **characterised in that** the foam core (12), cushion (8), mattress or padding is designed without a supporting spring system and/or without a spring core.

## Revendications

1. Partie centrale en mousse (12) pour un rembourrage (8, 9) d'une partie d'assise (2) ou d'une partie de couchage ou d'un dossier (3) d'un meuble rembourré (1) ou d'un siège de véhicule (11) ou pour un matelas ou support d'un meuble de couchage, comprenant un corps de base (13) de partie centrale en matériau de mousse, en particulier en mousse formée à froid, en mousse viscoélastique, en mousse de latex ou en mousse moulée, dans le corps de base (13) de partie centrale, une pluralité de lattes élastiques (14) étant prévues, s'étendant de préférence au moins sensiblement en parallèle les unes par rapport aux autres,
**caractérisée en ce**
**qu'**au moins une latte élastique (14) comprend une âme en fibres (20) comprenant de préférence des fibres de verre et en particulier pultrudée et une enveloppe (21) entourant l'âme en fibres (20) et constituée d'une matière synthétique thermoplastique, en particulier de polypropylène et
en ce que les lattes élastiques (14) dans le corps de base (13) de partie centrale sont expansées de manière à former une structure stratifiée sous la forme mousse - lattes élastiques (14) - mousse.

2. Partie centrale en mousse (12) pour un rembourrage (8, 9) d'une partie d'assise (2) ou d'une partie de couchage ou d'un dossier (3) d'un meuble rembourré (1) ou d'un siège de véhicule (11) ou pour un matelas ou support d'un meuble de couchage, en particulier selon la revendication 1, comprenant un corps de base (13) de partie centrale en matériau de mousse, en particulier en mousse formée à froid, en mousse viscoélastique, en mousse de latex ou en mousse moulée, dans le corps de base (13) de partie centrale, une pluralité de lattes élastiques (14) étant prévues, s'étendant de préférence au moins sensiblement en parallèle les unes par rapport aux autres,
**caractérisée en ce**
**qu'**au moins une latte élastique (14) comprend une âme en fibres (20) comprenant de préférence des fibres de verre et en particulier pultrudée et une enveloppe (21) entourant l'âme en fibres (20) et constituée d'une matière synthétique thermoplastique, en particulier de polypropylène et
en ce que les lattes élastiques (14) sont agencées entre une partie de corps de base (28) de partie centrale supérieure et une partie de corps de base (29) de partie centrale inférieure, la partie de corps de base (28) de partie centrale supérieure et la partie de corps de base (29) de partie centrale inférieure étant collées l'une à l'autre au niveau de leurs surfaces tournées l'une vers l'autre.

3. Partie centrale en mousse selon la revendication 1 ou 2, **caractérisée en ce que** les lattes élastiques (14) s'étendent longitudinalement ou transversalement entre les faces (15, 16) avant et arrière du corps de base (13) de partie centrale ; et/ou **en ce que** les lattes élastiques (14) sont agencées au moins sensiblement parallèles ou dans un plan horizontal par rapport au côté supérieur et/ou inférieur du corps de base (13) de partie centrale.

4. Partie centrale en mousse selon l'une quelconque des revendications précédentes, **caractérisée en ce qu'**une branche de latte (25, 26) se dresse respectivement depuis l'enveloppe (21) sur des côtés opposés.

5. Partie centrale en mousse selon l'une quelconque des revendications précédentes, **caractérisée en ce que** la largeur (B) de la branche de latte (25, 26) est supérieure, de préférence 1,5 fois, plus préférablement au moins 2 fois et en particulier entre 2,4 fois et 3 fois, au diamètre (D) de l'âme en fibres (20) ; et/ou **en ce que** l'épaisseur maximale (d) de la branche de latte (25, 26) est inférieure, de préférence au moins 2 fois, plus préférablement au moins 3 fois et en particulier entre 4 et 8 fois, au diamètre (D) de l'âme en fibres (20) et/ou **en ce que** la latte élastique (14) est symétrique par réflexion autour d'un axe central de branche (x) situé en coupe transversale à travers la branche de latte (25, 26) et/ou autour d'un axe central de partie centrale (y) situé à travers l'âme en fibres (20) s'étendant perpendiculairement à l'axe central de branche (x).

6. Partie centrale en mousse selon l'une quelconque des revendications précédentes, **caractérisée en ce que** l'âme en fibres (20) de la latte élastique (14) présente un brin d'âme en fibres, de préférence avec une coupe transversale sensiblement circulaire et un enroulement (22) entourant le brin d'âme en fibres au moins par endroits en forme de spirale, de préférence des spires (23) voisines de l'enroulement (22) étant espacées les unes des autres sans contact, de sorte qu'il en résulte des espaces intermédiaires (24) pour un engrenage avec le matériau d'enveloppe.

7. Partie centrale en mousse selon l'une quelconque des revendications précédentes, **caractérisée en ce que**, dans le corps de base (13) de partie centrale, sont prévues des lattes élastiques (14) notamment identiques pour leurs dimensions externes, mais présentant des élasticités différentes.

8. Partie centrale en mousse selon l'une quelconque des revendications précédentes, **caractérisée en ce que** dans chaque branche de latte (25, 26) est prévue une pluralité d'ouvertures (22), notamment les ouvertures (37) étant prévues à des intervalles réguliers et/ou dans un agencement répétitif dans la branche de latte (25, 26), en particulier le rapport de la surface d'ouverture libre des ouvertures (27) sur la surface de branche de latte correspondante à la surface de branche de latte étant compris entre 10 % et 80%, de préférence entre 20 % et 70 %, plus préférablement entre 30 % et 60 % et en particulier entre 40 % et 50 %.

9. Partie centrale en mousse selon l'une quelconque des revendications précédentes, **caractérisée en ce que** la partie de corps de base (28) de partie centrale inférieure présente un degré de dureté supérieur, en particulier avec une matière synthétique plus épaisse ou un degré de dureté identique à celui de la partie de corps de base (29) de partie centrale supérieure et/ou **en ce que**, dans le plan des lattes élastiques (14), côté bord, en particulier de manière périphérique côté cadre, une zone du corps de base (13) de partie centrale avec un degré de dureté supérieur, en particulier avec un matériau de mousse plus épais, est prévue en guise de partie de corps de base (28) de partie centrale supérieure.

10. Partie centrale en mousse selon l'une quelconque des revendications précédentes, **caractérisée en ce que** les lattes élastiques (14) sont disposées dans la zone médiane ou dans la zone médiane inférieure, en particulier dans le tiers inférieur jusqu'au cinquième inférieur du corps de base (13) de partie centrale.

11. Partie centrale en mousse selon l'une quelconque des revendications précédentes, **caractérisée en ce que** le corps de base (13) de partie centrale présente côté haut et/ou côté bas au moins une autre couche en matériau de rembourrage, de préférence en matériau de mousse, de préférence reliée avec celui-ci, plus préférablement collée, en particulier une couche prévue au-dessus du corps de base (13) de partie centrale présentant un degré de dureté inférieur à celui de la partie de corps de base (29) de partie centrale inférieure ou du corps de base (13) de partie centrale.

12. Rembourrage (8), matelas ou support comprenant une partie centrale en mousse (12) selon l'une quelconque des revendications précédentes.

13. Rembourrage, matelas ou support selon la revendication 12, **caractérisé en ce qu'**un revêtement extérieur (30) est prévu, dans lequel la partie centrale en mousse (12) est introduite et/ou **en ce que**, côté haut et/ou côté bas, au moins une autre couche en ouate de rembourrage et/ou en mousse est prévue et/ou **en ce que**, entre la face inférieure du revêtement (30) et la partie centrale en mousse (12), en particulier relié directement à la face inférieure du revêtement (30), un tissu de garnissage, en particulier un non-tissé et de préférence un non-tissé de polyester, est prévu.

14. Meuble rembourré (1), en particulier meuble d'assise ou de couchage ou siège de véhicule (11), comprenant une partie d'assise (2) et/ou une partie de couchage et/ou un dossier (3) et/ou au moins un matelas ou au moins un support, comprenant au moins une partie centrale en mousse (12) selon l'une quelconque des revendications précédentes ou au moins un rembourrage (8) selon l'une quelconque des revendications précédentes.

15. Meuble rembourré, en particulier meuble d'assise ou de couchage ou siège de véhicule selon la revendication 14, **caractérisé en ce que** la partie d'assise (2) et/ou le dossier (3) présente au moins un premier châssis (33) et, sur le côté opposé, un deuxième châssis (34) pour supporter la partie centrale en mousse (12) ou le rembourrage (8) ou un matelas ou un support, les extrémités des lattes élastiques (14) s'étendant sur le premier châssis (33) et le deuxième châssis (34).

16. Meuble rembourré, en particulier meuble d'assise ou de couchage ou siège de véhicule selon la revendication 14 ou 15, **caractérisé en ce que** la partie centrale en mousse (12) ou le rembourrage (8) ou le matelas ou le support est conçu(e) sans sommier à ressorts et/ou sans noyau à ressorts.
